# EUROPÄISCHE PATENTSCHRIFT

(11) **EP 0 610 316 B1**
(45) Veröffentlichungstag und Bekanntmachung des Hinweises auf die Patenterteilung: **14.06.1995**
(21) Anmeldenummer: 92922296.6
(22) Anmeldetag: 31.10.1992
(51) Int. Cl.: B62D 7/14, G05B 9/03, G06F 11/00

(54) **VERFAHREN UND VORRICHTUNG ZUR FEHLERBEHANDLUNG IN ELEKTRONISCHEN STEUERGERÄTEN**
PROCESS AND DEVICE FOR DEALING WITH ERRORS IN ELECTRONIC CONTROL DEVICES
PROCEDE ET DISPOSITIF POUR LE TRAITEMENT D'ERREURS DANS DES APPAREILS DE COMMANDE ELECTRONIQUES

(30) Priorität: 05.11.1991 DE 4136338
(43) Veröffentlichungstag der Anmeldung: 17.08.1994
(73) Patentinhaber: ROBERT BOSCH GMBH, 70442 Stuttgart (DE)
(72) Erfinder: WEISS, Eberhard, D-7254 Hemmingen (DE); STAHL, Manfred, D-7000 Stuttgart 40 (DE); MEDER, Klaus, D-7257 Ditzingen (DE); VIEHMANN, Karl, D-7414 Murr (DE); DRIEDGER, Guenter, D-7141 Oberriexingen (DE); NEUMANN, Juergen, D-2120 Lueneburg (DE); ALTHOFF, Heinz-Jürgen, D-7251 Weissach-Flacht (DE); SCHUH, Jürgen, D-7145 Markgröningen (DE); ZORBACH, Bert, D-7016 Gerlingen (DE)
(86) Internationale Anmeldenummer: DE9200909
(87) Internationale Veröffentlichungsnummer: WO9309020

(56) Entgegenhaltungen:
- EP-A- 0 334 723
- EP-A- 0 337 360
- WO-A-89/10865
- DE-A- 4 012 880

## Beschreibung

### Stand der Technik

Die Erfindung geht aus von einem Verfahren und einer Vorrichtung zur Fehlerbehandlung in elektronischen Steuergeräten nach der Gattung des Hauptanspruchs. Es ist schon ein Verfahren und eine Vorrichtung zur Fehlerbehandlung in einem elektronischen Steuergerät aus der DE 38 25 280 A1 bekannt. Das Steuergerät ist beispielhaft zur Steuerung einer Hinterachs-Lenkung bei einem Kraftfahrzeug vorgesehen. Dabei sind zwei Notlaufmaßnahmen für den Fall des Auftretens eines Fehlers vorgesehen. Bei einem relativ schweren Fehler besteht die eine Notlaufmaßnahme darin, die Hinterräder in der Stellung zu halten, die zuletzt, d.h. unmittelbar vor Auftreten des Fehlers, eingestellt war. Bei einem relativ leichten Fehler besteht die Notfallmaßnahme darin, die ausgelenkten Hinterräder gezielt und mit endlicher Geschwindigkeit in die Nullage zurückzuführen.

### Vorteile der Erfindung

Das erfindungsgemäße Verfahren mit den kennzeichnenden Merkmalen des Hauptanspruchs hat demgegenüber den Vorteil, daß für den Fall eines relativ leichten Fehlers ein Notfallprogramm gestartet wird, indem weiterhin Stellwerte für das Stellglied, wie im Hauptprogramm, berechnet werden. Diese Stellwerte werden mit einem mit Beginn der Abarbeitung des Notlaufprogramms zeitlich kleiner werdenden Faktor multipliziert, so daS sich ein langsames Abklingen der Stellamplitude des Stellgliedes ergibt. Es erfolgt ein gleitender Übergang von einem Auslenkungszustand des Stellgliedes hin zur Neutralposition des Stellgliedes. Damit kann bei einem relativ leichten Fehler die Steuerung des Stellgliedes weich abgeschaltet werden, ohne daß es zu einer drastischen Änderung im Steuerverhalten käme. Insbesondere bei der Steuerung einer Hinterradlenkung eines Kraftfahrzeuges ist das weiche Abschalten der Hinterradlenkung in einer Notfallsituation sicherer, da sich in diesem Fall das Fahrverhalten des Fahrzeuges nicht abrupt ändert.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, zur Konsistenzprüfung der erfaßten Gebersignale die erfaßten Gebersignale mit vorgegebenen Werten auf Überschreitung eines zulässigen Signalbereiches zu prüfen und/oder die erfaßten Gebersignale mit den erfaßten Gebersignalen der dazu vorhandenen redundanten Geber zu vergleichen. Dadurch kann in vielen Fällen eindeutig entschieden werden, welcher Geber einen Defekt aufweist und es kann dann die geeignete Notfallmaßnahme durchgeführt werden.

Weiterhin vorteilhaft ist es, zur Konsistenzprüfung der erfaßten Gebersignale die Änderungsraten der erfaßten Gebersignale in Abhängigkeit von vorgegebenen Größen mit vorgegebenen Werten zu vergleichen. Durch diese Maßnahme ist es möglich einen Fehler schon frühzeitig zu erkennen, so daß daraufhin die geeignete Notfallmaßnahme früher durchgeführt werden kann.

Ebenfalls vorteilhaft ist es, zur Konsistenzprüfung der erfaßten Gebersignale die erfaßten Gebersignale mit Werten zu vergleichen, die von erfaßten Gebersignalen der mit gleichwertiger Information behafteten Geber abgeleitet sind. Es wird dadurch möglich, einen Fehler für einen Geber sicherer zu erkennen, obwohl kein redundanter Geber für diesen Geber vorgesehen ist.

Weiterhin vorteilhaft ist es, bei der Konsistenzprüfung die Anzahl der erkannten Fehler mit vorgegebenen Werten zu vergleichen, wobei unterschiedliche Fehler dann mitgezählt werden, wenn sie einer identischen Fehlerursache zuzuordnen sind und eines der Notlaufprogramme erst dann abzuarbeiten, wenn die Anzahl der erkannten Fehler den vorgegebenen Wert erreicht hat. Die Abarbeitung eines Notlaufprogramms erst nach wiederholter Fehlererkennung ermöglicht es, eine überflüssige Abarbeitung eines Notlaufprogramms aufgrund einer kurzfristigen Störung, wie z.B. einer EMV-Störung, zu verhindern. Das Mitzählen von unterschiedlichen Fehlern, die aber einer identischen Fehlerursache zuzordnen sind, ermöglicht die frühere Einleitung der Notfallmaßnahme im Vergleich zu einer Wertung der Fehler als verschiedene, unabhängige Fehler.

Die Aktivierung der Sicherheitsvorrichtung in dem zweiten Notlaufprogramm und die Unterbrechung der Ansteuerung des Aktuators nach einer vorgegebenen Zeit ist ebenfalls vorteilhaft, weil danach ein sicherer Zustand für das Steuersystem erreicht ist und der Mikrorechner z.B. weitere Test- und Diagnoseprogramme ausführen kann. Nachdem dann das Steuergerät wieder als fehlerfrei erkannt wurde, ist es dann ebenfalls möglich, ein weiches Einschalten der Hinterradlenkung vorzunehmen. Dies kann durch eine langsame Vergrößerung der berechneten Lenkungsamplituden bis zur Größe wie im Hauptprogramm geschehen.

Für die Vorrichtung zur Steuerung des Lenkwinkels der Hinterräder eines Kraftfahrzeuges ist es ebenfalls vorteilhaft, ein Notfallprogramm vorzusehen, in dem die Stellwerte wie im Hauptprogramm berechnet werden. Diese Stellwerte werden ebenfalls mit einem zeitlich kleiner werdenden Faktor multipliziert, so daß sich ein langsames Abklingen der Stellamplitude des Stellgliedes ergibt.

Weiterhin vorteilhaft ist es, daß das erste Notlaufprogramm, in dem eine harte Abschaltung der Steuerung des Stellgliedes erfolgt, immer dann abgearbeitet wird, wenn bei der Konsistenzprüfung erkannt wird, daß keiner der Geber für den Lageistwert des Stellgliedes fehlerfrei arbeitet und/oder die von den Mikrorechnern berechneten Werte über ein vorgegebenes Maß hinaus abweichen. Das sofortige Abschalten der Steuerung ist in diesem Fall deswegen vorteilhaft, weil für ein geregeltes Verstellen des Stellgliedes die Stellerposition unbedingt benötigt wird.

Wird bei der Konsistenzprüfung erkannt, daß keiner der Geber für den Lenkwinkel fehlerfrei arbeitet, so ist es vorteilhaft, das dritte Notlaufprogramm abzuarbeiten. In diesem Fall besitzt das Steuersystem noch die Kontrolle über den Lageistwert, so daß die Einstellung des Stellgliedes noch in die Neutralposition zurückgefahren werden kann, um ein gutmütigeres Fahrverhalten zu erreichen.

Weiterhin ist es vorteilhaft, für die Vorrichtung zur Steuerung der Hinterradlenkung für die beiden Mikrorechner zwei Mikrorechner mit unterschiedlicher Halbleiterstruktur und/oder weiteren Unterschieden zu verwenden. Dadurch wird die Wahrscheinlichkeit des gleichzeitigen Auftretens eines unerkannten Fehlers in beiden Mikrorechnern verringert.

Ebenfalls ist es vorteilhaft, unterschiedliche Programme in den beiden Mikrorechnern zu installieren, um das gleichzeitige Auftreten eines unerkannten Fehlers in beiden Mikrorechnern weitgehend zu verhindern.

### Zeichnung

Zwei Ausführungsbeispiele der Erfindung sind in der Zeichnung dargestellt und in der nachfolgenden Beschreibung näher erläutert. Es zeigen Figur 1 eine schematische Darstellung eines Steuergerätes zur Steuerung einer Hinterradlenkung, Figur 2 ein erstes Ausführungsbeispiel einer einfachen Programmstruktur eines Hauptprogrammes zur Abarbeitung in dem ersten Mikrorechner, Figur 3 eine Programmstruktur eines Hauptprogramms zur Abarbeitung in dem zweiten Mikrorechner, Figur 4 eine Programmstruktur eines ersten Notlaufprogramms zur Abarbeitung im ersten Mikrorechner, Figur 5 eine Programmstruktur eines ersten Notlaufprogramms zur Abarbeitung im zweiten Mikrorechner, Figur 6 eine Programmstruktur eines zweitenNotlaufprogramms zur Abarbeitung im ersten Mikrorechner, Figur 7 eine Programmstruktur eines zweiten Notlaufprogramms zur Abarbeitung im zweiten Mikrorechner, Figur 8 eine Programmstruktur eines dritten Notlaufprogramms zur Abarbeitung in beiden Mikrorechnern, mit dem eine Abschaltung der Steuerung des Hinterachsstellers erreicht wird, Figur 9 ein zweites Ausführungsbeispiel für ein Struktogramm eines Hauptprogrammes zur Abarbeitung in dem ersten Mikrorechner, Figur 10 ein zweites Ausführungsbeispiel für ein Struktogramm eines Hauptprogrammes zur Abarbeitung in dem zweiten Mikrorechner, Figur 11 die Signalverläufe zweier Geber für den Lageistwert eines Stellgliedes bei einem ersten aufgetretenen Fehler, Figur 12 die Signalverläufe zweier Geber für den Lageistwert eines Stellgliedes bei einem zweiten aufgetretenen Fehler, Figur 13 die Signalverläufe zweier Geber für den Lageistwert eines Stellgliedes bei einem dritten aufgetretenen Fehler und Figur 14 die Signalverläufe zweier Geber für den Lageistwert eines Stellgliedes bei einem vierten aufgetretenen Fehler.

### Beschreibung der Erfindung

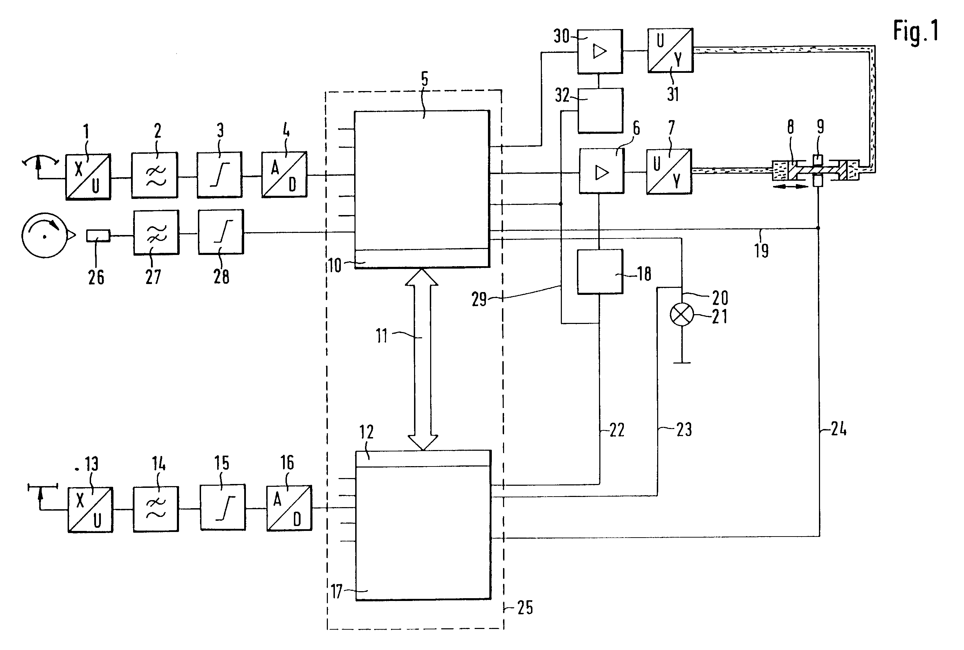

Figur 1 zeigt eine Ausführungsform eines Steuergerätes 25 zur Steuerung einer Hinterradlenkung. Darin ist ein Mikrorechner 5 gezeigt, der wichtige Elemente eines Mikrocomputers, wie RAM- und ROM-Speicher einen zentralen Mikroprozessor, Ein-/Ausgabe-Bausteine, sowie eine Schnittstelle 10 enthält. In dem ROM-Speicher sind ein Hauptprogramm und die Notlaufprogramme enthalten. Von der Schnittstelle 10 geht eine Busverbindung 11 zu der Schnittstelle 12 eines zweiten Mikrorechners 17. Statt der Verbindung der beiden Mikrorechner über Schnittstellen 10, 12 können auch bestimmte Ports der Mikrorechner 5, 17, serielle Schnittstellen oder ein Dual Port-RAM zur Verbindung der beiden Mikrorechner 5, 17 eingesetzt werden. Dieser enthält ebenfalls unter anderem einen RAM- und ROM-Speicher, einen zentralen Mikroprozessor und Ein-/Ausgabe-Bausteine. In dessen ROM-Speicher sind ein weiteres Haupt- und weitere Notlaufprogramme abgespeichert. Über die Busverbindung 11 können die beiden Mikrorechner 5, 17 Daten austauschen. Statt in beiden Mikrorechnern 5, 17 einzelne RAM-Speicher-Bausteine vorzusehen, ist es auch möglich einen DP-RAM-Baustein zu verwenden, auf den beide Mikrorechner 5, 17 zugreifen können. Die Signale eines Lenkwinkelsensors 1 werden nach Filterung mit Hilfe eines Filters 2 und Begrenzung durch einen Begrenzer 3 und A/D-Wandlung mit Hilfe des A/D-Wandlers 4 dem Mikrorechner 5 zugeführt. Das Signal eines Raddrehzahlgebers 26 wird ebenfalls über verschiedene Signalverarbeitungsstufen wie einen Filter 27 und einen Begrenzer 28 dem Mikrorechner 5 zugeführt. Das Signal eines Wegaufnehmers 13 für die Position eines Hinterachsstellers 8 wird nach Verarbeitung durch einen Filter 17, einen Begrenzer 15 und ein A/D-Wandler 16 dem Mikrorechner 17 zugeführt.

Weitere Geber mit den zugehörigen Signalketten können den beiden Mikrorechnern 5, 17 zugeführt sein. Für die Hinterradlenkung geeignete Sensoren sind z. B. Beschleunigungssensoren, weitere Raddrehzahlsensoren, Geschwindigkeitssensoren, Temperatur- und Drucksensoren für das Hydrauliksystem und Sensoren zur Lenkwinkelfeineinstellung. Zudem können einige der sicherheitsrelevanten Sensoren, z. B. der Lenkwinkelsensor 1 und der Wegaufnehmer 13 für die Position des Hinterachsstellgliedes 8, sowie der Geschwindigkeitssensor 26 doppelt vorhanden sein. Außerdem ist es möglich, wenn die einzelnen Steuergeräte des Kfz's durch ein Bussystem wie z. B. den CAN-Bus miteinander verknüpft sind, daß die diesen Steuergeräten zugeführten Sensorsignale auch dem Steuergerät 25 über eine CAN-Busleitung mitgeteilt werden.

Zur Verstellung des Hinterachsstellers 8 sind zwei als Proportionalventile ausgeführte Aktuatoren 7 und 31 vorgesehen. Diesen werden die berechneten Stellwerte über Ausgabebausteine im Mikrorechner 5 und nach Verstarkung durch die Endstufen 6, 30 zugeführt. Zur Arretierung des Hinterachsstellers 8 ist eine Haltebremse 9 vorgesehen, die über eine erste Verbindungsleitung 19 von dem Mikrorechner 5 und über eine zweite Verbindungsleitung 24 von dem Mikrorechner 17 aktiviert werden kann. Aus Sicherheitsgründen können im Hydrauliksystem auch Abschaltventile, sowie Testventile angebracht sein, die mit den Mikrorechnern 5, 17 verbunden werden, und über Abschaltung des Systemsdrucks die Haltebremse aktivieren. An den Mikrorechner 5 ist eine Fehlerlampe 21 über die Verbindungsleitung 20 und am Mikrorechner 17 über die Verbindungsleitung 23 angeschlossen. Zwei steuerbare Relais 18, 32 sind mit Hilfe der Verbindungsleitung 22 und 29 mit den Mikrorechnern 5, 17 verbunden. Damit können die Endstufen 6, 32 von der Versorgungsspannung getrennt werden.

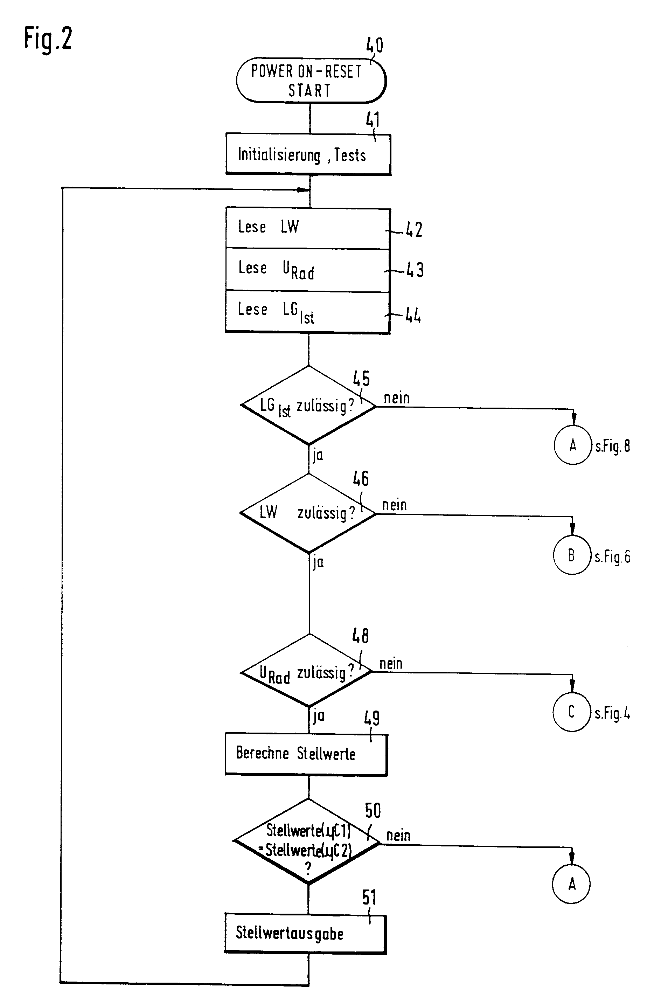

Die Wirkungsweise der Anordnung in Figur 1 zur Steuerung einer Hinterradlenkung wird nachfolgend anhand der Figuren 2 - 8 erklärt. Das Beispiel der Hinterradlenkung bezieht sich auf die 4-Rad-Lenkung bei einem PKW. Dabei werden die Vorderräder wie bei einer üblichen 2-Rad-Lenkung mit Hilfe einer mechanischen Anordnung verstellt. Die Einstellung der Hinterachse muß dann, je nach Fahrgeschwindigkeit und Fahrsituation, an den eingeschlagenen Lenkwinkel des Lenkrades angepaßt werden. So ist es z. B. zum Einparken sinnvoll, die Vorder- und Hinterräder parallel zu verstellen, während es zur Erlangung kleiner Wendekreise sinnvoll ist, die Vorderräder und Hinterräder in unterschiedliche Lenkwinkelrichtungen zu drehen. Bei Fahrten mit hoher Fahrgeschwindkeit, sowie bei Rückwärtsfahrten sind ebenfalls unterschiedliche Einstellungen der Hinterachse in Abhängigkeit von den Lenkwinkeleinschlägen vorzunehmen. Je nach Fahrsituation sollten daher unterschiedliche Berechnungsgrundlagen zur Steuerung der Hinterradlenkung zur Anwendung kommen.

Das in Figur 2 dargestellte Flußdiagramm soll den Ablauf des Hauptprogramms im Mikrorechner 5 verdeutlichen. Nach dem Power-on-reset 40 beginnt der Mikrorechner 5 mit der Abarbeitung seines Hauptprogramms. Darin wird als erstes im Programmschritt 41 eine Initialisierung durchgeführt.

Diese beinhaltet auch die Tests bestimmter im Mikrorechner 5 enthaltener oder an den Mikrorechner 5 angeschlossener Funktionsteile, wie ROM, RAM, EEPROM, Watchdog und der angeschlossenen Ventile, der Stellglieder und der Haltebremse. Danach wird der Lenkwinkel LW von dem Lenkwinkelgeber 1 sowie der Raddrehzahl-Wert U_{RAD} von dem angeschlossenen Raddrehzahlsensor 26 in den Programmschritten 42 und 43 eingelesen. Im Programmschritt 44 liest der Mikrorechner 5 den Lageistwert LG_{IST} des Hinterachsstellers 8 vom Wegaufnehmer 13. Dazu ist ein Datenaustausch zwischen den beiden Mikrorechnern 5, 17 erforderlich. Für den Fall, daß der Mikrorechner 17 diesen Wert zu diesem Zeitpunkt noch nicht ermittelt hat, muß der Mikrorechner 5 erst einige Wartezyklen einlegen und danach den Lageistwert vom Mikrorechner 17 erneut anfordern. Auf diese Weise wird eine Synchronisation der beiden Mikrorechner 5, 17 erreicht. In den nachfolgenden Abfragen werden die eingelesenen Geberwerte überprüft.

Nachdem der Rechner einen Fehler in einem der Geberwerte erkannt hat, ist die Fehlerursache noch nicht geklärt. Es können verschiedene Ursachen zu dem Fehler geführt haben. Zum einen kann der Fehler im Geber selbst liegen. Zum anderen ist es möglich, daß der Fehler in der Signalkette vom Geber bis zu einem der Mikrorechner aufgetreten ist. Hierunter fallen auch Fehler, durch EMV-Störungen. Eine dritte Möglichkeit ist, daß der Fehler in einem der beiden Mikrorechner 5, 17 begründet liegt. Für den Fall daß der Fehler in einem der Mikrorechner 5, 17 begründet liegt, ist ein sicherer Betrieb der 4-Rad-Lenkung nicht mehr gewährleistet und die Steuerung der Hinterachse muß augenblicklich unterbrochen werden. Liegt der Fehler im Geber und/oder in der Signalkette vom Geber zu einem der Mikrorechner 5, 17 begründet, so lassen sich je nach Geber eine Ersatzsteuerung und/oder Ersatzfunktionen durchführen, bei denen dieser Geberwert nicht mehr zur Berechnung der Stellwerte herangezogen wird. Die Unterscheidung dieser beiden Fehlerursachen wird dadurch gelöst, daß nach Fehlererkennung z. B. bei der Prüfung eines Geberwertes in ein Notlaufprogramm B,C innerhalb des, den Fehler erkennenden, Mikrorechners verzweigt wird und in diesem Notlaufprogramm B,C eine Prüfung der Mikrorechner 5, 17 mit Hilfe eines Datenaustausches durchgeführt wird. Die Prüfung mittels Datenaustausch beinhaltet vorwiegend einen Vergleich der durch beide Mikrorechner 5, 17 berechneten Stellwerte und/oder bestimmter Zwischenresultate. Es sind aber auch andere Möglichkeiten zur Überprüfung mittels Datenaustausch denkbar. So können z. B. auch bestimmte Registerinhalte der beiden Mikrorechner 5, 17 ausgetauscht und verglichen werden. Nachdem dadurch ein Fehler im Mikrorechner von den anderen Fehlerursachen unterschieden werden kann, kann entweder das geeignete Notlaufprogramm B,C weiter abgearbeitet werden, oder die Steuerung der Hinterachse unterbrochen werden. Da die Abschaltung der Steuerung der Hinterachse das Fahrverhalten signifikant verändert, soll möglichst oft ein anderes "sichereres" Notlaufprogramm B,C durchgeführt werden. Dies ist durch das hier beschriebene Verfahren moglich. Hinzu kommt, daß in der Praxis die Fehlerursache eines defekten Mikrorechners nicht so häufig vorkommt wie die anderen Fehlerursachen, so daß nicht nach jeder Fehlererkennung eine Abschaltung der Steuerung der Hinterachse notwendig ist.

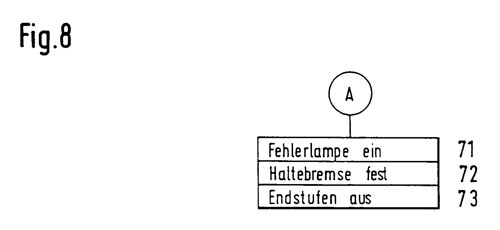

Als erstes wird der Lageistwert mit den vorgegebenen Bereichsgrenzwerten in der Abfrage 45 verglichen. Für den Fall, daß der Lageistwert nicht im vorgegebenen Sollwertbereich liegt, verzweigt das Hauptprogramm zu dem Notlaufprogramm A im Mikrorechner 5. Nach Fehlererkennung bei der Kontrolle des Lageistwertes kann ein sicherer Fahrbetrieb mit weiterer Hinterradlenkung nicht mehr gewährleistet werden, so daß in dem Notlaufprogramm A die Hinterradlenkung sofort abgeschaltet wird. Diese wird in der nachfolgenden Beschreibung der Figur 8 erklärt.

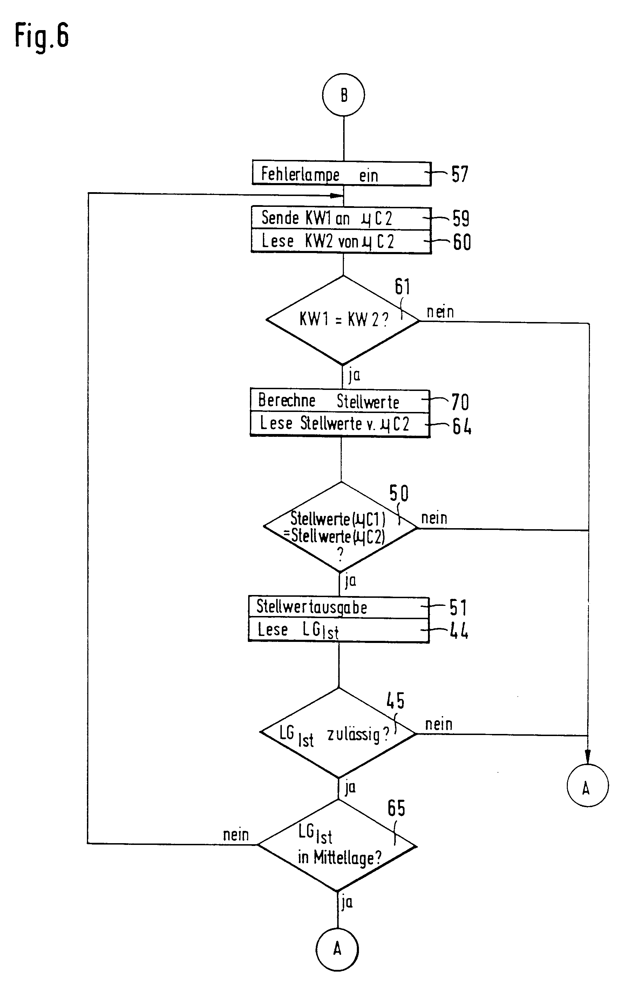

Mit der Abfrage 46 wird der eingelesene Lenkwinkelwert ebenfalls mit vorgebenen Bereichsgrenzwerten überprüft. Für den Fall, daß bei dieser Abfrage 46 eine Bereichsüberschreitung festgestellt wird, verzweigt das Programm zu einem weiteren Notlaufprogramm B. Da hier ein Fehler beim Lenkwinkelwert festgestellt wurde, hat das System für den Fall, daß der Fehler beim Lenkwinkelgeber 1 und/oder in der Signalkette vom Lenkwinkelgeber 1 zum Mikrorechner 5 liegt noch die Kontrolle über den Lageistwert des Hinterachsstellers 8. Somit kann im Notlaufprogramm B der Hinterachssteller in diesem Fall noch kontrolliert in die Mittellage verfahren werden. Das Fahrverhalten des Kraftfahrzeuges wird dadurch nicht so abrupt geändert. Das Notlaufprogramm B wird in der Beschreibung der Figur 6 näher erläutert.

Mit Abfrage 48 wird sodann überprüft, ob der eingelesene Raddrehzahlwert in seinem vorgegebenen Sollwertbereich liegt. Ist dies nicht der Fall, wird zu einem weiteren Notlaufprogramm C verzweigt. Sollte der Fehler beim Raddrehzahlgeber 26 und/oder in der Signalkette vom Raddrehzahlgeber 26 zum Mikrorechner 17 seine Ursache haben, so verbleibt noch die Kontrolle über den Lageistwert des Hinterachsstellers 8, sowie über den Lenkwinkeleinschlag des Lenkrades. Im Notlaufprogramm C können daher für eine kurze Zeit (in der sich die Fahrsituation nicht drastisch verändern kann) weiterhin Stellwerte für den Hinterachssteller 8 aus den eingelesenen Lenkwinkelwerten berechnet werden und an die Stellglieder 7, 31 ausgegeben werden. Zur Sicherheit läßt man die Stellwerte zur Einstellung des Hinterachsstellers 8 in diesem Notlaufprogramm weiterhin überprüfen und über einen bestimmten Zeitraum langsam abklingen, bis der Hinterachssteller 8 die Mittellage erreicht. Das Fahrverhalten des Kraftfahrzeuges ändert sich dann weniger drastisch als bei den Notlaufprogrammen A und B.

Weitere Prüfungen zur Fehlererkennung sind möglich. So können z. B. die Gradienten der Geberwerte auch im Vergleich zu den Gradienten der anderen Geberwerte einer Überprüfung unterzogen werden. Für den Fall, daß redundante Geber vorhanden sind, können diese ebenfalls zur Überprüfung herangezogen werden. Weiterhin können die Informationen bestimmter Geber mit den Informationen anderer Geber, die davon abhängige Größen erfassen untereinander verglichen werden. Beispielsweise geben die Geber für die Raddrehzahl und das Signal einer Tachometerwelle beide Informationen über die Geschwindigkeit des Kraftfahrzeuges Auskunft. Als weitere Möglichkeit einen Fehler sicher zu erkennen, kann die Häufigkeit der bei den Vergleichen und Prüfungen ermittelten Fehler überwacht werden, um erst bei Überschreitung bestimmter Häufigkeitsgrenzen in den Notlauf zu verzweigen. Bei der Überprüfung auf Erreichen der Mittellage ist es sinnvoll zuzulassen, daß der Hinterachssteller erst einige Male die Mittellage überfahren darf, ohne ihn in der Mittellage festzusetzen.

Erst wenn der Hinterachssteller praktisch nicht mehr um die Mittellage herum pendelt, kann er dann in dieser Position festgesetzt werden. Dies ermöglich, daß auch bei kurvenreicher Strecke keine abrupte Änderung der Fahreigenschaften eintritt. Wird bei den Abfragen 45 bis 48 kein Fehler erkannt, so werden im Schritt 49 die Stellwerte zur Einstellung der beiden Stellglieder 7 und 31 berechnet. Als Berechungsgrundlage werden die eingelesenen Geberwerte verwendet. Die Rechenfunktionen sind bei unterschiedlichen Fahrsituationen verschieden. Die berechneten Stellwerte werden in Abfrage 50 mit den berechneten Stellwerten des Mikrorechners 17 verglichen. Dazu ist wieder ein Datenaustausch zwischen den beiden Mikrorechnern 5, 17 erforderlich. Hier wird ebenfalls eine Synchronisation beider Mikrorechner 5, 17 wie im Programmschritt 44 erreicht. Sind die Rechenwerte beider Mikrorechner 5, 17 unterschiedlich, so wird von einem Fehler in einem der Mikrorechner 5, 17 ausgegangen und Notlaufprogramm A abgearbeitet. Im anderen Fall werden die Mittelwerte der in beiden Mikrorechnern 5, 17 errechneten Werte gebildet und an die Stellglieder 7, 31 ausgegeben. Bei dem hier beschriebenen Steuergerät geschieht die Ausgabe der Stellwerte nur durch den Mikrorechner 5. Diese Ausführungsart ergibt sich aus der Forderung innerhalb des Sicherheitskonzepts, daß die Steuervorrichtung nur dann Stellwerte an die Aktuatoren abgibt, wenn beide Rechner 5, 17 ordnungsgemäß arbeiten. Somit braucht nur einer der beiden Mikrorechner 5, 17 die Ausgabe vornehmen. Dies geschieht im Programmschritt 51. Damit ist das Programm einmal ordnungsgemäß abgearbeitet worden. die Programmschritte 42 bis 51 werden dann in gleicher Weise wiederholt. Dies geschieht bis das Steuergerät 25 durch Abschaltung der Zündung von der Versorgungsspannung getrennt wird.

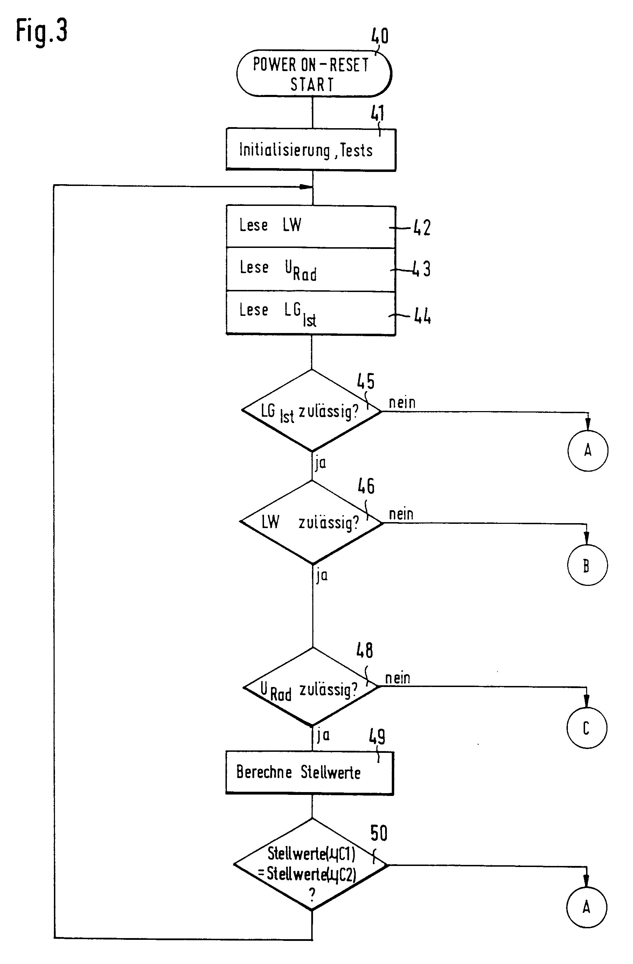

Das in Figur 3 dargestellte Flußdiagramm soll den Ablauf des Hauptprogramms im Mikrorechner 17 verdeutlichen. Es stimmt im wesentlichen mit dem Struktogramm in Figur 2 überein. Der erste Programmschritt nach dem Power-on-Reset 40 ist ebenfalls der Programmschritt 41 wie in Figur 2. Die dort beschriebenen Tests beziehen sich jetzt allerdings auf die an den Mikrorechner 17 angeschlossenen Funktionsteile. Der Aktivtest der beiden Stellglieder 7, 31 fällt hier jedoch weg, da die Stellglieder nur an den Mikrorechner 5 angeschlossen sind. Sodann wird der Lageistwert vom Wegaufnehmer 13 eingelesen. Dies geschieht im Programmschritt 44. Die Werte für den Lenkwinkel und die Raddrehzahl wurden in den Programmschritten 42 und 43 von dem Mikrorechner 5 übernommen. Für den dazu erforderlichen Datenaustausch gilt das entsprechende wie im Programmschritt 44 der Figur 2. Die Prüfung der eingelesenen Werte geschieht genau wie im Struktogramm der Figur 2 durch die Abfragen 45 bis 48. Es ist jedoch zu beachten, daß die Notlaufprogramme B und C im Mikrorechner 17 enthalten sind. Das Notlaufprogramm A stimmt mit dem Notlaufprogramm A in Figur 2 überein, ist aber auch im Mikrorechner 17 enthalten. Nach den Abfragen erfolgt hier ebenfalls die Berechnung der Stellwerte wie im Programmschritt 49 der Figur 2. Die Prüfung der durch beide Mikrorechner 5, 17 ermittelten Stellwerte geschieht hier ebenfalls nach dem Datenaustausch der Rechenergebnisse wie im Programmschritt 50 der Figur 2. Stimmen die Rechenergebnisse nicht überein, wird ebenfalls das Notlaufprogramm A aufgerufen. Bei ordnungsgemäßer Funktionsweise werden die Programmschritte 42 bis 50 wiederholt. Dies geschieht ebenfalls bis das Steuergerät von der Versorgungsspannung getrennt wird.

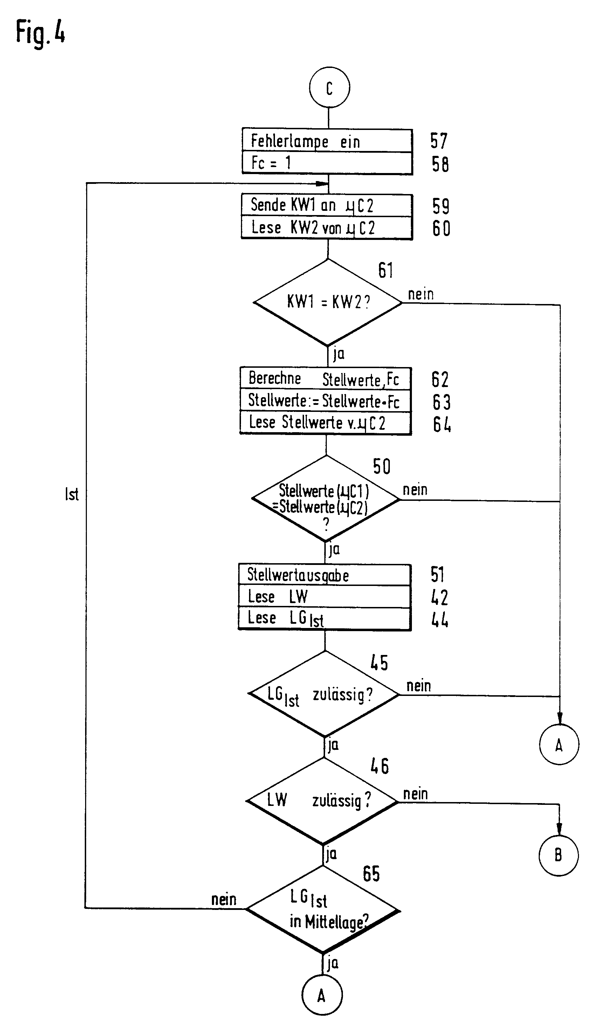

Das Flußdiagramm in Figur 4 soll das Notlaufprogramm C im Mikrorechner 5 verdeutlichen. Als erster Programmschritt 57 wird die Fehlerlampe 21 eingeschaltet. Mit dem folgenden Programmschritt 58 wird eine Variable auf den Wert 1 gesetzt. Im folgenden Programmschritt 59 sendet der Mikrorechner 5 ein spezielles Datenwort an den Mikrorechner 17. Dieses signalisiert dem Mikrorechner 17, daß der Mikrorechner 5 einen Fehler erkannt hat und Notlaufprogramm C aufgerufen hat. Der Mikrorechner 17 sendet daraufhin sein Kontrollwort an den Mikrorechner 5 zurück. Das Kontrollwort wird von dem Mikrorechner 5 aufgenommen, was im Programmschritt 60 geschieht. In der Abfrage 61 findet dann ein Vergleich zwischen den an dem Mikrorechner 17 gesendeten und dem von dem Mikrorechner 17 empfangenen Kontrollwort statt. Stimmen die Kontrollworte nicht überein, so interpretiert der Mikrorechner 5 dieses Ergebnis dahingehend, daß ein Fehler in einem der Mikrorechner 5, 17 vorliegt und führt die Notabschaltung, durch Abarbeitung des Notlaufprogramms A, durch. Durch diese Kontrolle wird überprüft, ob beide Rechner die gleichen Notlaufprogramme abarbeiten. Der Programmschritt 62 dient zur regulären Berechnung der Stellwerte für die Aktuatoren. Dies geschieht nach den gleichen Rechenschritten, wie im Hauptprogramm des Mikrorechner 5, allerdings ohne die Informationen des als fehlerhaft erkannten Raddrehzahlgebers zu verwenden. Basis dieser Berechnung sind die eingelesenen Geberwerte für den Lenkwinkel und den Lageistwert. Das Rechenergebnis wird im Programmschritt 63 mit einem zeitabhängigen Faktor multipliziert. Dieser Faktor wurde im Programmschritt 58 auf den Wert 1 gesetzt. Er wird im Programmschritt 62 in Abhängigkeit von der inzwischen vergangenen Zeit neu berechnet. Durch Multiplikation der berechneten Stellwerte mit einem Faktor, der sich mit der Zeit von 1 auf 0 verändert, erreicht man ein langsames Abklingen der Lenkamplituden an der Hinterachse. Der Kraftfahrer kann sich durch diese Ersatzsteuerung an das veränderte Fahrverhalten seines Kraftfahrzeuges langsam gewöhnen. Im Programmschritt 64 werden die Stellwerte, die in dem anderen Mikrorechner 17 auf die gleiche Art berechnet wurden, durch Datenübertragung über die Busverbindung 11 an den Mikrorechner 5 übermittelt. In der nachfolgenden Abfrage 50 werden die Rechenergebnisse beider Rechner 5, 17 miteinander verglichen. Stimmen die Ergebnisse nicht überein, so muß ein Fehler in einem der Mikrorechner 5, 17 vorliegen. Daraufhin wird die Notabschaltung durch Aufruf des Notlaufprogramms A eingeleitet. Liefern beide Rechner die gleichen Ergebnisse, so muß der Fehler bei dem Raddrehzahlgeber 26 und/oder der Signalkette von dem Raddrehzahlgeber 26 zum Mikrorechner 5 liegen und es kann mit der Abarbeitung des Notlaufprogramms C fortgefahren werden. Die von beiden Rechnern 5, 17 ermittelten Stellwerte werden dann im Programmschritt 51 gemittelt und an die Stellglieder 7, 31 ausgegeben. Im Programmschritt 42 wird der Lenkwinkel wie im Hauptprogramm eingelesen und im Programmschritt 44 der Lageistwert wie im Hauptprogramm vom Mikrorechner 17 übernommen. Danach laufen die Bereichsüberprüfungen von Lageistwert und Lenkwinkelwert wie im Hauptprogranm ab (Abfragen 45 und 46). Im Programmschritt 65 wird der Lageistwert zusätzlich auf Erreichen der Mittellage des Hinterachsstellers 8 überprüft. Für den Fall, daß die Mittellage erreicht ist, wird die Steuerung des Stellgliedes durch Aufruf des Notlaufprogramms A abgeschaltet. Bei der Überprüfung auf Erreichen der Mittellage ist es sinnvoll zuzulassen, daß der Hinterachssteller erst einige Male die Mittellage überfahren darf ohne ihn in der Mittellage festzusetzen. Erst wenn der Hinterachssteller praktisch nicht mehr um die Mittellage herum pendelt kann er dann in dieser Position festgesetzt werden. Dies ermöglicht, daß auch bei kurvenreicher Strecke keine abrupte Änderung der Fahreigenschaften eintritt. Damit wird dann das Notlaufprogramm C auch beendet und das Fahrzeug wird von dort an nur durch die Vorderradlenkung gelenkt. Eine weitere Aktivierung der 4-Rad-Lenkung kann dann erst wieder nach Zündung Aus/Ein und erfolgreichen Tests erfolgen.

Ist die Mittellage noch nicht erreicht, werden die Programmschritte 59 bis 65 so lange wiederholt, bis die Mittellage erreicht ist. Bei der Abschaltung der Zündung werden die den Fehler charakterisierenden Datenworte eventuell mit den zugehörigen Betriebsdaten in einem Speicherbereich abgelegt. Sie stehen dann für eine nachträgliche Diagnose mit Hilfe eines Diagnosegerätes in einer Werkstatt zur Verfügung.

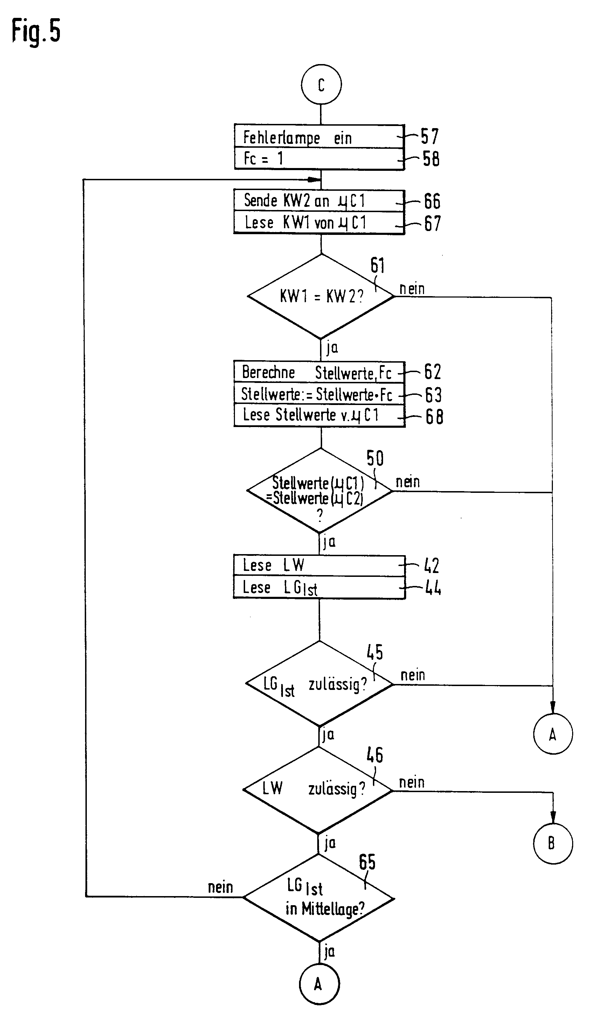

Figur 5 zeigt das Flußdiagramm für das Notlaufprogramm C im Mikrorechner 17. Die Programmschritte 57 und 58 entsprechen den gleichen Programmschritten in Figur 4. Im Programmschritt 66 sendet der Mikrorechner 17 sein Kontrollwort an den Mikrorechner 5. Im Programmschritt 67 liest der Mikrorechner 17 das Kontrollwort vom Mikrorechner 5. Abfrage 61 überprüft beide Kontrollworte auf Gleichheit wie im Programmschritt 61 in Figur 4. In den Programmschritten 62 und 63 wird die Berechnung der Stellwerte wie in den gleichen Programmschritten der Figur 4 vorgenommen. Im Programmschritt 68 liest der Mikrorechner 17 die von dem Mikrorechner 5 berechneten Stellwerte wie im Programmschritt 64 der Figur 4. Die weiteren Programmschritte entsprechen denen des Struktogramms von Figur 4, mit dem Unterschied, daß der Programmschritt 51 zur Ausgabe der Stellwerte entfällt. Außerdem werden die entsprechenden Notlaufprogramme im Mikrorechner 17 statt im Mikrorechner 5 aufgerufen.

Im folgenden wird das Notlaufprogramm B des Mikrorechners 5 beschrieben. Dazu dient das Struktogramm in Figur 6. Das Notlaufprogramm B stellt ein weiteres Notlaufprogramm dar, das ein sanftes Abschalten der Hinterradlenkung nach Fehlererkennung ermöglicht. Im Programmschritt 57 wird die Fehlerlampe eingeschaltet. In den Programmschritten 59 und 60 werden die Kontrollwörter für dieses Notlaufprogramm wie in den gleichen Programmschritten des Notlaufprogramms C in Figur 4 ausgetauscht und im Programmschritt 61 miteinander verglichen. Der wesentliche Unterschied zum Notlaufprogramm C ist, daß die Berechnung der Stellwerte ohne die Information der Gebersignale geschieht. Hier wird der Hinterachssteller 8 z. B. mit der Geschwindigkeit von 0,5 Meter/Sek. in Richtung auf die Mittellage verstellt. Die dafür erforderlichen Rechnungen werden in dem Programmschritt 70 durchgeführt. In Programmschritt 64 werden die Stellwerte, die von dem Mikrorechner 17 berechnet wurden, eingelesen und im Programmschritt 50 wie beim Notlaufprogramm C in Figur 4 miteinander verglichen. Danach erfolgt wieder die Ausgabe der Stellwerte im Programmschritt 51 und das Einlesen des Lageistwertes vom Mikrorechner 17 im Programmschritt 44 sowie die Überprüfung dieses Wertes in Abfrage 45. Die Abfrage 65 dient wieder zur Erkennung der Mittellage des Hinterachsstellers 8. Ist die Mittellage noch nicht erreicht, so werden die Programmschritte 59 bis 65 wiederholt. Bei Erreichung der Mittellage wird wieder die Steuerung durch Aufruf des Notlaufprogramms A abgeschaltet. Wie beim Notlaufprogramm C kann dann eine weitere Aktivierung der 4-Rad-Lenkung erst wieder nach Zündung Aus/Ein und erfolgreichen Tests erfolgen.

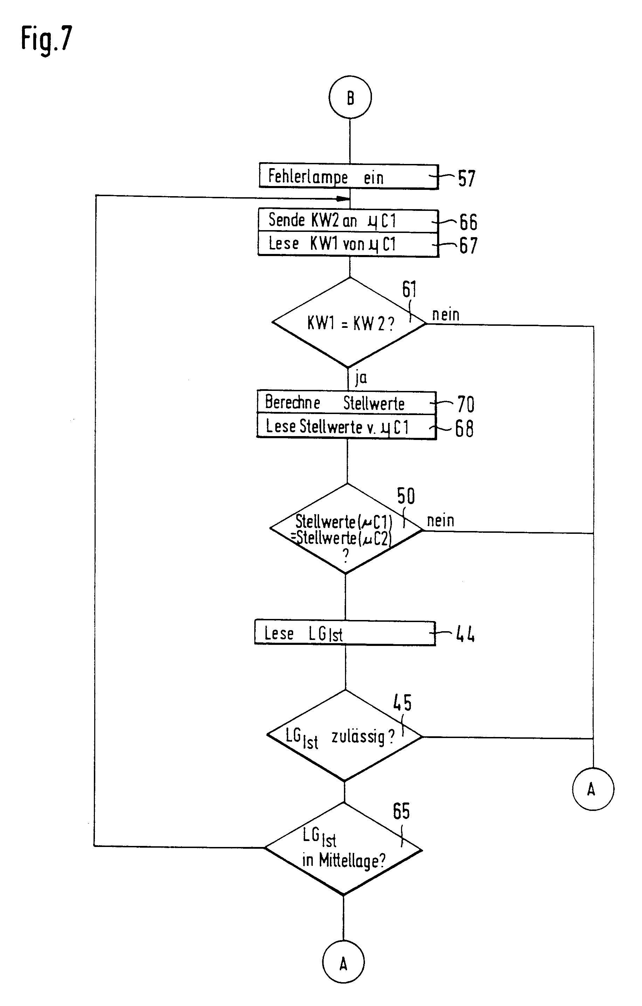

In entsprechender Weise wird das Struktogramm für das Notlaufprogramm B im Mikrorechner 17 abgearbeitet. Es ist in Fig. 7 dargestellt. Unterschiede zum Notlaufprogramm B in Figur 6 bestehen in der Tatsache, daß die Ausgabe der Stellwerte entfällt, daß im Programmschritt 66 das Kontrollwort zum Mikrorechner 5 gesendet wird und das Kontrollwort vom Mikrorechner 5 im Programmschritt 67 gelesen wird, und daß im Programmschritt 68 die berechneten Werte des Mikrorechners 5 gelesen werden.

Nach Durchführung der Notlaufprogramme B oder C sind auch andere Weiterbildungen des Verfahrens als Abschaltung der Hinterradlenkungssteuerung möglich. So könnte z. B. nach Durchführung eines Notlaufprogramms die Hinterradlenkungssteuerung bei Unterschreitung einer bestimmten Geschwindigkeit wieder hinzugeschaltet werden. Dies könnte z. B. in analoger Weise zum Notlaufprogramm C geschehen, d. h., so, daß die Lenkungsamplituden über einen bestimmten Zeitraum langsam vergrößert werden bis die Lenkungsamplituden wieder wie im Hauptprogramm berechnet werden. Natürlich müssen dann in dieser Phase weiterhin Fehlerüberprüfungen stattfinden, die dann im Fehlerfall wieder eine Abschaltung bewirken.

Figur 8 zeigt das Struktogramm für das Notlaufprogramm A. Dieses Struktogramm ist für beide Rechner gültig. Es werden in diesem Notlaufprogramm die 3 Programmschritte 71, 72 und 73 abgearbeitet. Programmschritt 71 dient zur Einschaltung der Fehlerlampe 21. Im Programmschritt 72 wird die Haltebremse 9 vom jeweiligen Mikrorechner 5, 17 aktiviert. Danach werden im Programmschritt 73 die Endstufen 6, 30 mit Hilfe der steuerbaren Relais 18, 32 abgeschaltet. Die Endstufen können dann vom Hauptprogramm erst nach Zündung Aus/Ein und erfolgreichen Sicherheitstests eingeschaltet werden.

Im folgenden wird ein zweites Ausführungsbeispiel für ein Hauptprogramm zur Abarbeitung in den Mikrorechnern 5, 17 beschrieben. Der Aufbau des Steuergerätes für das zweite Ausführungsbeispiel stimmt mit demjenigen des ersten Ausführungsbeispiels weitgehend überein. Es ist dabei jedoch vorausgesetzt, daß einige Sensoren, wie z.B. der Geber 13 für den Lageistwert des Stellgliedes 8, der Geber 1 für den Lenkwinkel, doppelt vorhanden sind, wobei jeweils einer der beiden Geber am Mikrorechner 5 und der andere der beiden Geber am Mikrorechner 17 angeschlossen ist. Alle am Mikrorechner 5 angeschlossenen Sensoren bilden eine erste Gruppe der Geber, alle am Mikrorechner 17 angeschlossenen Sensoren bilden eine zweite Gruppe der Geber.

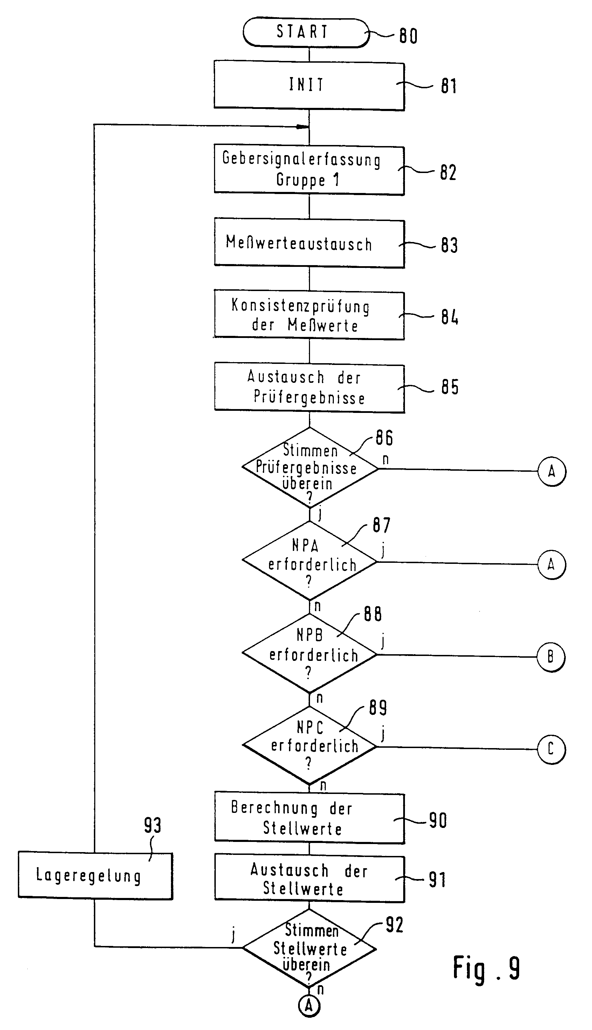

Die Arbeitsweise des Mikrorechners 5 wird im folgenden anhand des Struktogramms von Figur 9 erläutert. Nach dem Programmstart 80 findet eine Initialisierungsphase des Steuergerätes wie im ersten Ausführungsbeispiel statt. Anschließend werden im Programmschritt 82 die Gebersignale aller an den Mikrorechner 5 angeschlossenen Geber erfaßt. Die ermittelten Meßwerte werden im Programmschritt 83 an den Mikrorechner 17 gesendet. Danach übernimmt der Mikrorechner 5 die vom Mikrorechner 17 ermittelten Meßwerte. Es findet also in dem Programmschritt 83 ein Meßwerteaustausch zwischen den beiden Mikrorechnern 5 und 17 statt. Durch diesen Meßwerteaustausch wird gleichzeitig eine Synchronisation beider Mikrorechner erzielt. Im nachfolgenden Programmschritt 84 findet dann eine Überprüfung der ermittelten Meßwerte statt. Bei dieser Konsistenzüberprüfung werden verschiedene Prükriterien abgefragt. Genauere Einzelheiten zu den Prüfkriterien werden im Anschluß an die Beschreibung der Struktogramme für die Hauptprogramme näher erläutert.

Durch die Konsistenzüberprüfung wird eine Entscheidung herbeigeführt, ob das Hauptprogramm weiter abgearbeitet werden kann und falls nicht, welches von drei verschiedenen Notlaufprogrammen abgearbeitet werden soll. Die Ergebnisse der Konsistenzüberprüfung werden im Programmschritt 85 zwischen den beiden Mikrorechnern 5, 17 ausgetauscht. Anschließend findet in Abfrage 86 die Abfrage statt, ob beide Rechner zu den gleichen Prüfergebnissen gelangt sind. Ist dies nicht der Fall, wird Notlaufprogramm A wie im ersten Ausführungsbeispiel beschrieben, abgearbeitet. Stimmten die Prüfergebnisse beider Mikrorechner 5, 17 überein, folgen drei Abfragen 87, 88 und 89. In Abfrage 87 werden die Prüfergebnisse daraufhin analysiert, ob die Abarbeitung des Notlaufprogramms A erforderlich ist. Falls ja, wird in Notlaufprogramm A verzweigt. In Abfrage 88 werden die Prüfergebnisse daraufhin analysiert, ob die Abarbeitung des Notlaufprogramms B erforderlich ist. Falls ja, wird Notlaufprogramm B abgearbeitet. In Abfrage 89 werden die Prüfergebnisse schließlich daraufhin analysiert, ob die Abarbeitung des Notlaufprogramms C erforderlich ist. Wenn dieses der Fall ist, wird Notlaufprogramm C anschließend abgearbeitet. Ergab die Konsistenzprüfung der Meßwerte beider Mikrorechner, daß eine Abarbeitung eines Notlaufprogramms nicht erforderlich ist, wird mit dem Hauptprogramm fortgefahren. Es folgt dann im Programmschritt 90 die Berechnung der Stellwerte unter Ausnutzung der erfaßten Gebersignale.

Im Programmschritt 91 werden die berechneten Stellwerte zwischen den beiden Mikrorechnern 5, 17 ausgetauscht. Dadurch wird wieder eine Synchronisation beider Mikrorechner erzielt. In Abfrage 92 findet dann ein Vergleich der ausgetauschten Stellwerte statt. Stimmen die Stellwerte nicht überein, so wird davon ausgegangen, daß ein schwerwiegender Fehler vorliegt und der Mikrorechner 5 verzweigt zum Notlaufprogramm A. Stimmen die Stellwerte überein, so findet im Programmschritt 93 die Lageregelung statt. Dabei erzeugt der Mikrorechner 5 entsprechend den errechneten Stellwerten Steuersignale für die Aktuatoren 7, 31 des Stellgliedes 8. Mit der Lageregelung ist ein Regelzyklus ordnungsgemäß abgearbeitet. Der nächste Regelzyklus wird dann mit der Gebersignalerfassung im Programmschritt 82 begonnen.

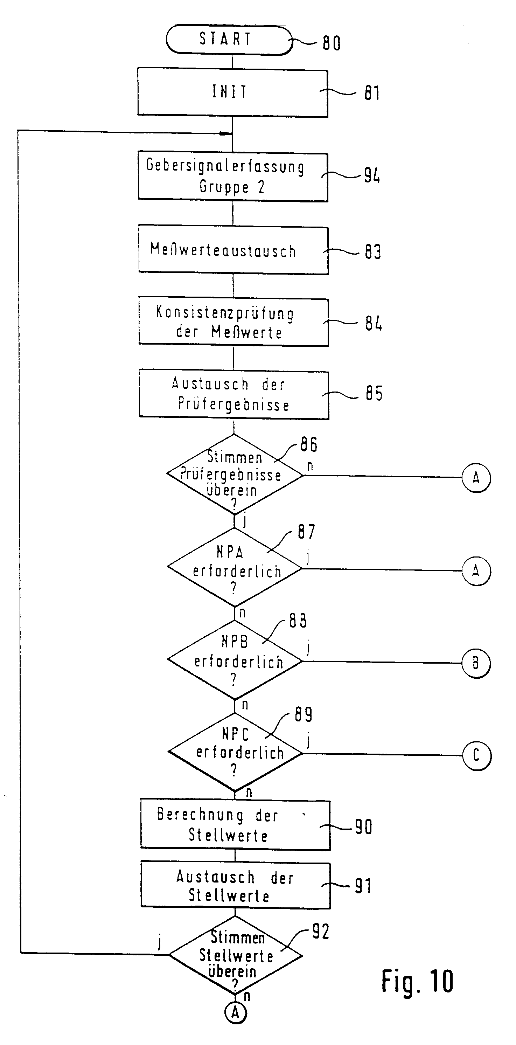

In Figur 10 ist das Struktogramm des zu Figur 9 entsprechenden Struktogramms für das Hauptprogramm zur Abarbeitung im Mikrorechner 17 dargestellt. Es stimmt im wesentlichen mit dem Struktogramm in Figur 9 überein. Ein Unterschied besteht darin, daß bei der Gebersignalerfassung im Programmschritt 94 die an den Mikrorechner 17 angeschlossenen Geber, d.h. die Gruppe 2 der Geber erfaßt werden. Danach werden die gleichen Programmschritte 83 bis 92, wie im Mikrorechner 5 abgearbeitet. Der Programmschritt 93, der die Lageregelung beinhaltet, entfällt für das Hauptprogramm des Mikrorechners 17, da der Mikrorechner 17 nicht zur regulären Ansteuerung der Aktuatoren 7, 31 des Stellgliedes 8 ausgelegt ist.

Im folgenden wird genauer auf die Konsistenzprüfung der Meßwerte in den Programmschritten 84 beider Struktogramme der Figuren 9 und 10 eingegangen.

Ein Signal verändert sich bei Eintreten eines Fehlers grundsätzlich in endlicher Zeit, so daß vor einer Überschreitung des zulässigen Signalbereiches auch ein Wert gemessen werden kann, der sich außer durch Abweichung z.B. von einem redundanten Gebersignal zunächst nur durch einen zu großen Gradienten auszeichnet. In der Regel (z.B. bei Drahtbruch, Kurzschluß) folgt darauf ein Überschreiten des zulässigen Signalbereichs ("out of range"). Das Fehlerbild eines Sensors setzt sich damit zusammen
- aus einem Endzustand der fehlerhaften Signale ausreichend lange nach Fehlereintritt und
- aus der sequentiellen Abfolge gleichartiger oder verschiedenartiger Plausibilitätsverletzungen direkt nach Fehlereintritt.

Während der Konsistenzprüfung werden verschiedene Kriterien für das Vorliegen eines Fehlers abgefragt. Das erste Kriterium ist, ob der festgestellte Meßwert überhaupt im zulässigen Meßbereich für diesen Geber liegt. Das zweite Kriterium ist, ob sich ein Gebersignal mit einer in der Praxis nicht möglichen (nicht erlaubten) Geschwindigkeit verändert. Dazu muß der aktuelle Meßwert des Gebers mit dem zuvor ermittelten Meßwert in Beziehung gesetzt werden. Eine zu große Änderung eines Gebersignales deutet dann schon frühzeitig auf das Vorliegen eines Fehlers hin, auch wenn der zulässige Meßbereich für das Gebersignal noch nicht überschritten ist.

Ein weiteres Kriterium für das Vorliegen eines Fehlers ist eine zu große Abweichung zwischen den Meßwerten zweier gleicher Sensoren, von denen also einer redundant ist. Auch dieses Kriterium deutet schon auf das Vorliegen eines Fehlers hin, auch wenn die Gebersignale noch im zulässigen Meßbereich liegen.

Durch Einbeziehung nicht nur der aktuellen Meßwerte, sondern ebenfalls der vorhergehenden Meßwerte in die Fehleranalyse läßt sich in vielen Fällen schon eine genaue Fehlerinformation erhalten. Z.B. ist aus dem zeitlichen Ablauf:
- Abweichung zwischen zwei gleichen Geberwerten plus ein Gradient der Geberwerte zu groß
- Abweichung zwischen zwei gleichen Geberwerten plus ein Wert außerhalb des zulässigen Meßbereiches
- und Abweichung zwischen zwei gleichen Geberwerten plus ein Geberwert außerhalb des zulässigen Meßbereiches
zu schließen, daß das Signal mit dem zu großen Gradienten bzw. dem unzulässigen Signalwert verfälscht ist, das andere Signal aber noch korrekt und damit (zumindest kurzzeitig) weiterverwendbar ist. Ausgehend von der Fehlerinformation wird dann die geeignete Notfallmaßnahme ausgewählt und eingeleitet. Dabei wird dann die Information des als Defekt erkannten Gebers nicht mehr für die Steuerung des Stellgliedes ausgenutzt.

Um das Auslösen eines Notfallprogramms für sehr kurzzeitige Störungen (z.B. EMV) zu verhindern, werden mehrere zeitlich aufeinanderfolgende Signalwerte ausgewertet. Daher wird die zeitliche Abfolge der Plausibilitätsverletzungen (nicht notwendigerweise identisch) zur Entscheidung herangezogen, welches der Notfallprogramme ausgelöst wird.

Die Zeitdauer bzw. die Anzahl der direkt aufeinanderfolgenden Plausibilitätsüberschreitungen bis zum Auslösen der Notlaufmaßnahme ist einerseits so groß zu wählen, daß kurzzeitige Störungen überbrückt werden, andererseits müssen Notmaßnahmen, insbesondere bei sehr dynamischen Systemen, möglichst schnell eingeleitet werden, d.h. die Fehlerreaktionszeit ist zu minimieren. Dazu werden in der vorliegenden Erfindung unterschiedliche Plausibilitätsüberschreitungen als gleicher Fehler gewertet, wenn sie einer identischen Fehlerursache zuzuordnen sind.

Im folgenden werden einige mögliche Fälle von Signalverläufen zweier gleicher Geber für den Lageistwert des Stellgliedes 8 vorgestellt. Die Information für den Lageistwert ist in dem Lenksystem einfach redundant vorhanden. Die Erfassung der Geberwerte geschieht in jedem Mikrorechner 5, 17 zyklisch (z.B. jede Millisekunde).

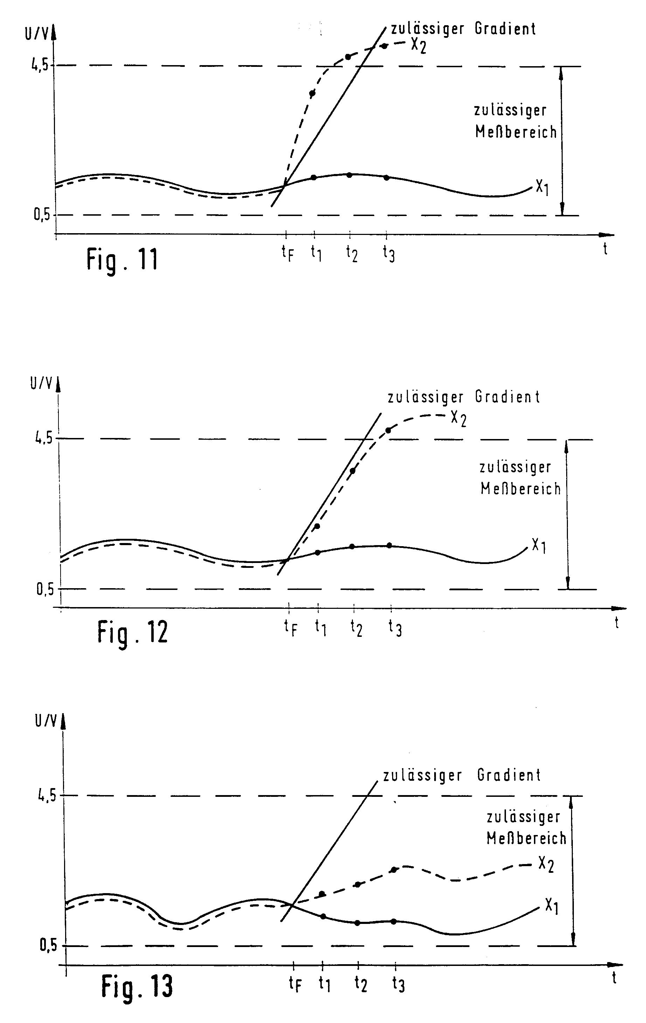

In Figur 11 sind die beiden ersten Signalverläufe x₁, x₂ für die beiden Geber dargestellt. Der zulässige Meßbereich für die Lageistwertgeber liegt zwischen 0,5 und 4,5 Volt. Als höchste erlaubte Abweichung zwischen den beiden Meßwerten ist 0,2 Volt festgesetzt. Als größte erlaubte zeitliche Änderung eines Lageistwertes ist 15 V/s gewählt. Bevor eine Notlaufmaßnahme eingeleitet wird, müssen drei aufeinanderfolgende Fehlererkennungen stattgefunden haben. Zum Zeitpunkt t_{F} tritt ein Fehler auf. Für die Mikrorechner 5, 17 ergibt sich bei den nachfolgenden Signalerfassungen zu den Zeitpunkten t₁, t₂, t₃ folgendes Fehlerbild (siehe Tabelle 1).

| | t₁ | t₂ | t₃ |
|---|---|---|---|
| x₁ | kein Fehler | kein Fehler | kein Fehler |
| x₂ | Gradient zu groß | Meßbereich überschritten | Meßbereich überschritten |
| (x₁-x₂) | Abweichung zu groß | Abweichung zu groß | Abweichung zu groß |

Aufgrund dieses Fehlerbildes ermitteln die Mikrorechner 5, 17, daß der Geber x₂ einen Defekt aufweist, hingegen kann Geber x₁ weiter benutzt werden.

In Figur 12 tritt ebenfalls zum Zeitpunkt t_{F} ein Fehler auf. Für die Mikrorechner ergibt sich aus den Signalerfassungen zu den Zeitpunkten t₁, t₂, t₃ folgendes Fehlerbild (siehe Tabelle 2):

| | t₁ | t₂ | t₃ |
|---|---|---|---|
| x₁ | kein Fehler | kein Fehler | kein Fehler |
| x₂ | kein Fehler | kein Fehler | Meßbereich überschritten |
| (x₁-x₂) | Abweichung zu groß | Abweichung zu groß | Abweichung zu groß |

Auch aufgrund dieses Fehlerbildes ermitteln die beiden Mikrorechner 5, 17, daß Geber x₂ einen Defekt aufweist und Geber x₁ weiter benutzt werden kann.

Bei den Signalverläufen nach Figur 13 ergibt sich für die beiden Mikrorechner 5, 17 nach Signalerfassung folgendes Fehlerbild (siehe Tabelle 3):

| | t₁ | t₂ | t₃ |
|---|---|---|---|
| x₁ | kein Fehler | kein Fehler | kein Fehler |
| x₂ | kein Fehler | kein Fehler | kein Fehler |
| (x₁-x₂) | Abweichung zu groß | Abweichung zu groß | Abweichung zu groß |

Aufgrund dieses Fehlerbildes können die beiden Mikrorechner den Fehler nicht identifizieren. Sie leiten daher Notlaufprogramm A ein, um einen sicheren Zustand zu erreichen.

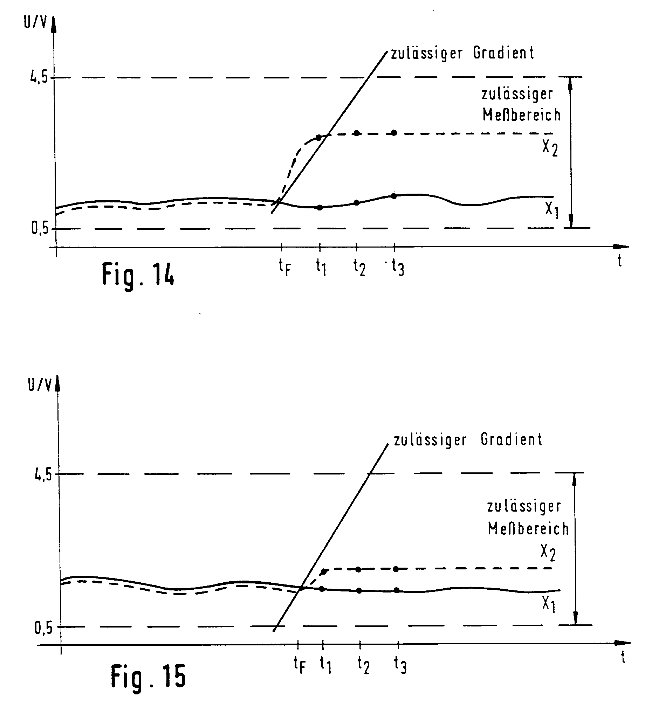

In Figur 14 ist ein viertes Beispiel für die Signalverläufe der Lageistwertgeber dargestellt. Aufgrund dieser Signalverläufe stellt sich folgendes Fehlerbild für die beiden Mikrorechner 5, 17 dar (siehe Tabelle 4):

| | t₁ | t₂ | t₃ |
|---|---|---|---|
| x₁ | kein Fehler | kein Fehler | kein Fehler |
| x₂ | Gradient zu groß | kein Fehler | kein Fehler |
| (x₁-x₂) | Abweichung zu groß | Abweichung zu groß | Abweichung zu groß |

Auch aufgrund dieses Fehlerbildes wird Signal x₂ als Defekt erkannt und Signal x₁ kann weiterbenutzt werden.

Diese Fehleranalyse ist prinzipiell auch für Sensoren geeignet, die keine direkte Redundanz aufweisen. Auch die erfaßten Gebersignale von Gebern, die mit gleichwertiger Information behaftet sind, können auf zulässige Gradienten bzw. Bereichsüberschreitungen überwacht werden. Auch in diesem Fall kann also eine Entscheidung herbeigeführt werden, welcher Signalpfad als sicher defekt einzustufen ist. Zur Entscheidung welches Notlaufprogramm nach einer dreimaligen Fehlererkennung abgearbeitet wird, nehmen die Mikrorechner 5, 17 bei der Konsistenzprüfung auch eine Bewertung der Wichtigkeit des als Defekt erkannten Sensors vor. Für die Steuerung einer Hinterradlenkung werden folgende Sensoren verwendet:
- Zwei Lageistwertgeber, die die Position des Stellgiedes erfassen,
- zwei Lenkwinkelgeber, die den Drehwinkel des Lenkrades erfassen,
- ein Geber für die Fahrzeuggeschwindigkeit (hierunter fallen z.B. Geber, die die Drehung einer Tachowelle erfassen, es können aber auch für den gleichen Zweck Raddrehzahlgeber eingesetzt sein, wie sie z.B. auch bei einem ABS-Steuergerät Verwendung finden; der Tachowellengeber dient dann als redundanter Geber entweder für die Raddrehzahl eines Rades oder für den Mittelwert der beiden Raddrehzahlen der beiden Raddrehzahlgeber),
- Geber für den Beldungszustand des Fahrzeugs,
- Geber für die Information, ob der Rückwärtsgang eingelegt ist oder nicht,
- Geber für die Giergeschwindigkeit des Fahrzeuges,
- Geber für die Querbeschleunigung des Fahrzeuges,
- Geber für den Seitenwindeinfluß auf das Fahrzeug,
- Geber für die Karosserieneigung des Fahrezeugs.

Die Stellerposition wird immer dann benötigt, wenn der Steller geregelt verfahren werden soll. Wenn also ein Defekt in diesem Sensor eintritt, ist keine geregelte Stellerbewegung mehr möglich, es kommt also nur Ersatzfunktion A in Betracht. Der Lenkwinkelgeber berücksichtigt den dynamischen Lenkzustand des Fahrzeugs. Ohne eindeutige Kenntnis darüber, welches Einselsignal noch korrekt arbeitet, ist damit kein zur Vorderachse synchrones Lenken der Hinterräder möglich. Wenn der Lageistwertgeber aber nicht gleichzeitig ausfällt, kann Ersatzfunktion B durchgeführt werden. Fahrgeschwindigkeit, Beladungszustand und Vor/Rückwärtsfahrt ändern sich dynamisch nur langsam. Direkt vor Fehlereintritt gemessene und gespeicherte Werte behalten noch für eine relativ lange Zeit ihre Gültigkeit und behindern das synchrone Lenken der Hinterachse nicht. Z.B. ändert sich der Beladungszustand des Fahrzeugs und der Wechsel zwischen Vorwärtsfahrt und Rückwärtsfahrt nur im Stillstand des Fahrzeugs, die Fahrgeschwindigkeit ändert sich mit einer maximalen Beschleunigung von 1g, wobei eine fehlerhaft zu groß angenommene Geschwindigkeit für das Fahrzeug die Fahrzeugsicherheit nicht beeinträchtigt. Damit ist hier Ersatzfunktion C auch dann möglich, wenn keines der Signale eindeutig als noch brauchbar erkannt wird.

Zusammenfassend ist in der folgenden Tabelle 5 dargestellt, welches Notlaufprogramm vom jeweiligen Mikrorechner abgearbeitet wird, wenn ein Einzelsignal der aufgelisteten Geber noch als benutzbar/nicht benutzbar angesehen wird.

| | Einzelsignal benutzbar | Einzelsignal nicht benutzbar |
|---|---|---|
| Lageistwert | C | A |
| Lenkwinkel Fahrge- | C | B |
| schwindigkeit Beladungszu- | C | C |
| stand Rückwärts- | C | C |
| fahrt | C | C |

Das beschriebene Verfahren zur Fehlerbehandlung in elektronischen Steuergeräten ist vielfältig abwandelbar. So ist es nicht unbedingt erforderlich zwei oder mehr Mikrorechner für das Steuergerät vorzusehen. Bei geringeren Sicherheitsanforderungen ist es durchaus möglich bloß einen Mikrorechner vorzusehen.

## Patentansprüche

1. Verfahren zur Fehlerbehandlung in elektronischen Steuergeräten, insbesondere in einem Steuergerät zur Steuerung des Lenkwinkels der Hinterräder eines Kraftfahrzeuges, mit mindestens einem Mikrorechner, an den Geber und mindestens ein Aktuator zur Einstellung mindestens eines Stellgliedes angeschlossen sind, wobei bestimmte Geber redundant ausgelegt sind, mit mindestens einer an das mindestens eine Stellglied angebrachten und von dem mindestens einen Mikrorechner steuerbaren Sicherungsvorrichtung, mit mindestens einem Hauptprogramm in dem mindestens einen Mikrorechner in dem die Signale der Geber erfaßt, aus den erfaßten Signalen Werte berechnet und die berechneten Werte und/oder die erfaßten Gebersignale auf Konsistenz geprüft werden, wobei die berechneten Werte zumindest teilweise zur Einstellung des mindestens einen Stellgliedes dienen, aus denen dann entsprechende Steuersignale erzeugt werden und an den mindestens einen Aktuator abgegeben werden, mit mindestens zwei Notlaufprogrammen, wobei durch die Konsistenzprüfung eine Entscheidung herbeigeführt wird, ob das Hauptprogramm oder eines der mindestens zwei Notlaufprogramme abgearbeitet wird, wobei im ersten Notlaufprogramm mindestens die mindestens eine Sicherungsvorrichtung aktiviert und die Ansteuerung des mindestens einen Aktuators zur Einstellung des mindestens einen Stellgliedes unterbrochen wird, dadurch gekennzeichnet, daß im zweiten Notlaufprogramm (C) weiterhin die Signale von Gebern erfaßt und aus den erfaßten Signalen jeweils Werte berechnet werden, wobei die Werte zumindest teilweise zur Einstellung des mindestens einen Stellgliedes dienen, daß die erfaßten Gebersignale und die berechneten Werte weiterhin auf Konsistenz überprüft werden, daß die weiterhin berechneten Werte zur Einstellung des mindestens einen Stellgliedes (8) mit einem mit Beginn der Abarbeitung des zweiten Notlaufprogramms (C) zeitlich kleiner werdenden Faktor multipliziert werden um ein langsames Abklingen der Stellamplitude des Stellgliedes (8) zu erzielen und daß darin weiterhin zu den berechneten Werten entsprechende Steuersignale erzeugt und an den mindestens einen Aktuator (7, 31) abgegeben werden.

2. Verfahren nach Anspruch 1, dadurch gekennzeichnet, daß zur Konsistenzprüfung der erfaßten Gebersignale jedes erfaßte Gebersignal mit vorgegebenen Werten auf überschreitung eines zulässigen Signalbereiches geprüft wird.

3. Verfahren nach Anspruch 1 oder 2, dadurch gekennzeichnet, daß zur Konsistenzprüfung der erfaßten Gebersignale die Änderungsraten der erfaßten Geberwerte in Abhängigkeit von vorgegebenen Größen mit vorgegebenen Werten verglichen werden.

4. Verfahren nach einem der vorhergehenden Ansprüche, dadurch gekennzeichnet, daß zur Konsistenzprüfung der erfaßten Gebersignale die erfaßten Gebersignale mit den erfaßten Gebersignalen der dazu vorhandenen redundanten Geber verglichen werden.

5. Verfahren nach einem der vorhergehenden Ansprüche, dadurch gekennzeichnet, daß zur Konsistenzprüfung der erfaßten Gebersignale die erfaßten Gebersignale mit Werten verglichen werden, die von erfaßten Gebersignalen der mit gleichwertiger Information behafteten Geber, abgeleitet sind.

6. Verfahren nach einem der vorhergehenden Ansprüche, dadurch gekennzeichnet, daß bei der Konsistenzprüfung die Anzahl der erkannten Fehler mit vorgegebenen Werten verglichen werden, wobei unterschiedliche Fehler dann mitgezählt werden, wenn sie einer identischen Fehlerursache zuzuordnen sind und daß eines der mindestens zwei Notlaufprogramme erst dann abgearbeitet wird, wenn die Anzahl der erkannten Fehler den vorgegebenen Wert erreicht hat.

7. Verfahren nach einem der vorhergehenden Ansprüche, dadurch gekennzeichnet, daß im zweiten Notlaufprogramm (C) die mindestens eine Sicherungsvorrichtung (8) nach einer vorgegebenen Zeit aktiviert und die Ansteuerung des mindestens einen Aktuators (7, 31) zur Einstellung des mindestens einen Stellgliedes (8) unterbrochen wird.

8. Verfahren nach einem der vorhergehenden Ansprüche, dadurch gekennzeichnet, daß der mindestens eine Mikrorechner (5, 17) ein drittes Notlaufprogramm (B) aufweist, in dem Werte zur Einstellung des mindestens einen Stellgliedes (8) nach einer fest vorgegebenen Berechnungsgrundlage berechnet werden, ohne die Information der Gebersignale für die Berechnung auszunutzen.

9. Verfahren nach Anspruch 8, dadurch gekennzeichnet, daß in dem dritten Notlaufprogramm (B) eine Prüfung der Stellung des mindestens einen Stellgliedes (8) vorgenommen wird und bei Erkennung der Mittellage das erste Notlaufprogramm (A) abgearbeitet wird.

10. Vorrichtung zur Steuerung des Lenkwinkels der Hinterräder eines Kraftfahrzeuges, nach dem Verfahren nach einem der vorhergehenden Ansprüche, mit mindestens zwei Mikrorechnern, mit mindestens einem Geber für den Lenkwinkel, die Fahrgeschwindigkeit und die Raddrehzahl der Räder einer Achse des Fahrzeuges, mit mindestens einem Stellglied zur Einstellung des Lenkwinkels der Räder einer Achse des Fahrzeuges, mit mindestens einem Geber für den Lageistwert des Stellgliedes, mit einer Haltebremse als Sicherungsvorrichtung für das Stellglied, mit mindestens einem Aktuator zur Einstellung des Stellgliedes, mit mindestens einem Hauptprogramm in jedem der Mikrorechner in dem die Mikrorechner die Signale der Geber erfassen, aus den erfaßten Signalen Werte berechnen und die berechneten Werte und/oder die erfaßten Gebersignale auf Konsistenz prüfen, wobei die berechneten Werte zumindest teilweise zur Einstellung des mindestens einen Stellgliedes dienen, aus denen dann einer der mindestens zwei Mikrorechner entsprechende Steuersignale erzeugt und an den mindestens einen Aktuator abgibt, mit mindestens zwei Notlaufprogrammen in jedem der Mikrorechner, wobei die mindestens zwei Mikrorechner (5, 17) durch die Konsistenzprüfung eine Entscheidung herbeiführen, ob das Hauptprogramm oder eines der mindestens zwei Notlaufprogramme abgearbeitet wird, wobei die mindestens zwei Hikrorechner im ersten Notlaufprogramm mindestens die mindestens eine Sicherungsvorrichtung aktivieren und die Ansteuerung des mindestens einen Aktuators zur Einstellung des mindestens einen Stellgliedes unterbrechen, dadurch gekennzeichnet, daß die mindestens zwei Mikrorechner (5,17) im zweiten Notlaufprogramm (C) weiterhin die Signale von Gebern erfassen und aus den erfaßten Signalen jeweils Werte berechnen, wobei die Werte zumindest teilweise zur Einstellung des mindestens einen Stellgliedes dienen, daß die mindestens zwei Mikrorechner (5, 17) die erfaßten Gebersignale und die berechneten Werte weiterhin auf Konsistenz prüfen, daß sie die weiterhin berechneten Werte zur Einstellung des mindestens einen Stellgliedes (8) mit einem mit Beginn der Abarbeitung des zweiten Notlaufprogramms (C) zeitlich kleiner werdenden Faktor multiplizieren um ein langsames Abklingen der Stellamplitude des Stellgliedes (8) zu erzielen, daß mindestens einer der mindestens zwei Mikrorechner (5, 17) weiterhin zu den berechneten Werten entsprechende Steuersignale erzeugt und an den mindestens einen Aktuator (7, 31) abgibt.

11. Vorrichtung nach Anspruch 10, dadurch gekennzeichnet, daß die Geber für den Lenkwinkel und den Lageistwert mindestens einfach redundant ausgelegt sind, wobei jeweils der Geber und der redundante Geber an unterschiedliche Mikrorechner (5, 17) angeschlossen sind.

12. Vorrichtung nach Anspruch 11, dadurch gekennzeichnet, daß die mindestens zwei Mikrorechner (5, 17) das erste Notlaufprogramm (A) immer dann abarbeiten, wenn sie bei der Konsistenzprüfung erkennen, daß keiner der Geber für den Lageistwert (13) des Stellgliedes (8) fehlerfrei arbeitet und/oder die von den mindestens zwei Mikrorechnern (5,17) berechneten Werte über ein vorgegebenes Maß hinaus abweichen.

13. Vorrichtung nach Anspruch 11 oder 12, dadurch gekennzeichnet, daß die mindestens zwei Mikrorechner (5, 17) das dritte Notlaufprogramm (B) immer dann abarbeiten, wenn sie bei der Konsistenzprüfung erkennen, daß keiner der Geber für den Lenkwinkel (1) fehlerfrei arbeitet.

14. Vorrichtung nach einem der Anspüuche 10 bis 13, dadurch gekennzeichnet, daß zur Unterbrechung der Ansteuerung des mindestens einen Aktuators (7,31) der Mikrorechner (5,17) den mindestens einen Aktuator (7,31) von der Versorgungsspannung trennt.

15. Vorrichtung nach Anspruch 14, dadurch gekennzeichnet, daß der entsprechende Mikrorechner (5, 17) zur Trennung der Versorgungsspannung mindestens ein Relais (18, 32) schaltet.

16. Vorrichtung nach einem der Ansprüche 10 bis 15, dadurch gekennzeichnet, daß sie eine Fehleranzeige (21) aufweist, die nach Aufruf eines der Notlaufprogramme (A,B,C) aktiviert wird.

17. Vorrichtung nach einem der Ansprüche 10 bis dadurch gekennzeichnet, daß die Überprüfung der erfaßten Gebersignale und/oder berechneten Werte durch verschiedene Programmabläufe in den jeweiligen Mikrorechnern (5, 17) erfolgt.

18. Vorrichtung nach einem der Ansprüche 10 bis 17, dadurch gekennzeichnet, daß die jeweiligen Mikrorechner (5, 17) unterschiedliche Halbleiterstrukturen aufweisen.

19. Vorrichtung nach einem der Ansprüche 10 bis 18, dadurch gekennzeichnet, daß zur Überwachung der jeweiligen Mikrorechner (5, 17) jeweils Überwachungsschaltungen an die jeweiligen Mikrorechner (5, 17) angeschlossen sind, die von den jeweiligen Mikrorechnern (5, 17) Signale erhalten und bei Ausbleiben der Signale die Ansteuerung des mindestens einen Aktuators (7, 31) zur Einstellung des mindestens einen Stellgliedes (8) unterbrechen.

20. Vorrichtung nach einem der Ansprüche 10 bis 19, dadurch gekennzeichnet, daß sie ein Dual Port-RAM aufweist, auf das die mindestens zwei Mikrorechner (5, 17) zugreifen können.

## Claims

1. Process for dealing with errors in electronic control devices, in particular in a control unit for controlling the steering angle of the rear wheels of a motor vehicle, having at least one microcomputer to which sensors and at least one actuator for setting at least one final control element are connected, specific sensors being configured to be redundant, having at least one safety device which is attached to the at least one final control element and can be controlled by the at least one microcomputer, having at least one main program in the at least one microcomputer in which the signals of the sensors are detected, values are calculated from the detected signals and the calculated values and/or the detected sensor signals are tested for consistency, the calculated values serving at least partially to set the at least one final control element, from which values corresponding control signals are then produced and output to the at least one actuator, having at least two emergency operation programs, as a result of the consistency test a decision being brought about as to whether the main program or one of the at least two emergency operation programs is processed, at least the at least one safety device being actuated in the first emergency operation program and the actuation of the at least one actuator in order to set the at least one final control element being interrupted, characterized in that in the second emergency operation program (C) the signals continue to be detected from sensors and in each case values are calculated from the detected signals, the values serving at least partially to set the at least one final control element, in that the detected sensor signals and the calculated values continue to be tested for consistency, in that the values which continue to be calculated in order to set the at least one final control element (8) are multiplied by a factor which becomes smaller over time with the start of the processing of the second emergency operation program (C) in order to achieve a slow decay of the setting amplitude of the final control element (8), and in that control signals which continue to correspond to the calculated values are produced therein and are output to the at least one actuator (7, 31).

2. Process according to Claim 1, characterized in that, for the consistency testing of the detected sensor signals, each detected sensor signal is tested with prescribed values to determine whether it exceeds an acceptable signal range.

3. Process according to Claim 1 or 2, characterized in that, for the consistency testing of the detected sensor signals, the rates of change of the detected sensor values as a function of prescribed variables are compared with prescribed values.

4. Process according to one of the preceding claims, characterized in that, for the consistency testing of the detected sensor signals, the detected sensor signals are compared with the detected sensor signals of the redundant sensors which are present for that purpose.

5. Process according to one of the preceding claims, characterized in that, for the consistency testing of the detected sensor signals, the detected sensor signals are compared with values which are derived from detected sensor signals of the sensors which acquire equivalent information.

6. Process according to one of the preceding claims, characterized in that during the consistency testing the number of detected errors is compared with prescribed values, different errors then being included in the count if they can be assigned to an identical cause of error, and in that one of the at least two emergency operation programs is not processed until the number of detected errors has reached the prescribed value.

7. Process according to one of the preceding claims, characterized in that in the second emergency operation program (C) the at least one safety device (8) is activated after a prescribed time and the actuation of the at least one actuator (7, 31) is interrupted in order to set the at least one final control element (8).

8. Process according to one of the preceding claims, characterized in that the at least one microcomputer (5, 17) has a third emergency operation program (B) in which values for setting the at least one final control element (8) are calculated according to a permanently prescribed calculation principle without using the information of the sensor signals for the calculation.

9. Process according to Claim 8, characterized in that a testing of the position of the at least one final control element (8) is performed in the third emergency operation program (B) and when the central position is detected the first emergency operation program (A) is processed.

10. Device for controlling the steering angle of the rear wheels of a motor vehicle, according to the process according to one of the preceding claims, having at least two microcomputers, having at least one sensor for the steering angle, the driving speed and the wheel speed of the wheels of one axle of the vehicle, having at least one final control element for setting the steering angle of the wheels of one axle of the vehicle, having at least one sensor for the actual position value of the final control element, having a holding brake as safety device for the final control element, having at least one actuator for setting the final control element, having at least one main program in each of the microcomputers in which the microcomputers detect the signals of the sensors, calculate values from the detected signals and test the calculated values and/or the detected sensor signals for consistency, the calculated values serving at least partially to set the at least one final control element, from which values one of the at least two microcomputers produces corresponding control signals and outputs them to the at least one actuator, having at least two emergency operation programs in each of the microcomputers, the at least two microcomputers (5, 17) bringing about a decision, by means of the consistency testing, as to whether the main program or one of the at least two emergency operation programs is being processed, the at least two microcomputers at least activating the at least one safety device in the first emergency operation program and interrupting the actuation of the at least one actuator in order to set the at least one final control element, characterized in that, in the second emergency operation program (C), the at least two microcomputers (5, 17) continue to detect the signals from sensors and in each case calculate values from the detected signals, the values serving at least partially to set the at least one final control element, in that the at least two microcomputers (5, 17) continue to test the detected sensor signals and the calculated values for consistency, in that they multiply the values which continue to be calculated for setting the at least one final control element (8) by a factor which becomes smaller over time with the start of the processing of the second emergency operation program (C) in order to achieve a slow decay of the setting amplitude of the final control element (8), in that at least one of the at least two microcomputers (5, 17) continues to produce control signals which correspond to the calculated values and outputs them to the at least one actuator (7, 31).

11. Device according to Claim 10, characterized in that the sensors for the steering angle and the actual position value are configured with at least single redundancy, in each case the sensor and the redundant sensor being connected to different microcomputers (5, 17).

12. Device according to Claim 11, characterized in that the at least two microcomputers (5, 17) always process the first emergency operation program (A) whenever they detect during the consistency testing that none of the sensors for the actual position value (13) of the final control element (8) is operating free of errors and/or the values calculated by the at least two microcomputers (5, 17) deviate beyond a prescribed degree.

13. Device according to Claim 11 or 12, characterized in that the at least two microcomputers (5, 17) always process the third emergency operation program (B) whenever they detect during the consistency testing that none of the sensors for the steering angle (1) is operating free of errors.

14. Device according to one of Claims 10 to 13, characterized in that, in order to interrupt the actuation of the at least one actuator (7, 31), the microcomputer (5, 17) disconnects the at least one actuator (7, 31) from the supply voltage.

15. Device according to Claim 14, characterized in that the corresponding microcomputer (5, 17) switches at least one relay (18, 32) in order to disconnect the supply voltage.

16. Device according to one of Claims 10 to 15, characterized in that it has an error display (21) which is activated after one of the emergency operation programs (A, B, C) is called up.

17. Device according to one of Claims 10 to 16, characterized in that the detected sensor signals and/or calculated values are tested by means of various program cycles in the respective microcomputers (5, 17).

18. Device according to one of Claims 10 to 17, characterized in that the respective microcomputers (5, 17) have different semiconductor structures.

19. Device according to one of Claims 10 to 18, characterized in that in order to monitor the respective microcomputers (5, 17) monitoring circuits are connected to the respective microcomputers (5, 17) in each case, which monitoring circuits receive signals from the respective microcomputers (5, 17) and, in the event of the signals being absent, interrupt the actuation of the at least one actuator (7, 31) in order to set the at least one final control element (8).

20. Device according to one of Claims 10 to 19, characterized in that it has a dual port RAM which can be accessed by the at least two microcomputers (5, 17).

## Revendications

1. Procédé de traitement des erreurs survenant dans des appareils électroniques de commande, notamment de commande de l'angle de braquage des roues arrière d'une automobile, appareil dans lequel :
- à au moins un microcalculateur sont raccordés des transmetteurs et au moins un actionneur agissant sur au moins un organe de réglage,
- certains transmetteurs sont redondants,
- il existe au moins un dispositif de sécurité monté sur au moins un organe de réglage et que peut commander au moins un microcalculateur,
- au moins un programme principal peut être exploité dans au moins un des microcalculateurs, pour saisir les signaux des transmetteurs et en tirer par le calcul des valeurs, ces valeurs et/ou les signaux saisis étant contrôlés au niveau de leur consistance,
- les valeurs calculées servent au moins partiellement à positionner au moins un organe de réglage, en fournissant les signaux de commande correspondants qui sont délivrés à au moins un actionneur,
- il est prévu au moins deux programmes de circulation de secours, le contrôle de consistance conduisant à la décision d'utiliser le programme principal ou l'un des au moins deux programmes de secours,
- le premier programme de secours prévoit d'activer au moins un des dispositifs de sécurité et d'interrompre la commande d'au moins un actionneur agissant sur au moins un organe de réglage,
procédé présentant les caractéristiques suivantes :
- un second programme de circulation de secours (C) saisit également les signaux des transmetteurs et en déduit par le calcul des valeurs utilisées au moins en partie pour positionner au moins un organe de réglage,
- les signaux des transmetteurs ainsi que les valeurs qui en ont été tirées par le calcul sont soumis à un contrôle de consistance,
- les valeurs calculées utilisées pour le positionnement d'au moins un organe de réglage (8) sont multipliées par un facteur qui va décroissant avec le temps écoulé depuis le début de la mise en oeuvre du second programme de secours (C), de manière à faire décroître lentement l'amplitude du mouvement de l'organe de réglage (8),
- des signaux de commande correspondant aux valeurs calculées sont produits et adressés à au moins un des actionneurs (7, 31).

2. Procédé selon la revendication 1, caractérisé en ce que, pour le contrôle de la consistance des signaux des transmetteurs, chaque signal saisi est contrôlé avec des valeurs données, en ce qui concerne la sortie d'un domaine admissible.

3. Procédé selon la revendication 1 ou 2, caractérisé en ce que pour le contrôle de la consistance des signaux des transmetteurs, les taux de variation des signaux saisis sont comparés en fonction de grandeurs données, à des valeurs données.

4. Procédé selon une des revendications précédentes, caractérisé en ce que pour le contrôle de la consistance des signaux des transmetteurs, les signaux saisis sont comparés avec les signaux saisis provenant de transmetteurs redondants prévus à cet effet.

5. Procédé selon une des revendications précédentes, caractérisé en ce que pour le contrôle de la consistance des signaux des transmetteurs, les signaux saisis sont comparés à des valeurs découlant de signaux saisis provenant de transmetteurs ayant reçu une information identique.

6. Procédé selon une des revendication précédentes, caractérisé en ce que dans le contrôle de la consistance, le nombre des erreurs reconnues est comparé à des valeurs données, des erreurs différentes étant considérées comme une seule si elles doivent être attribués à une cause identique, l'un au moins des deux programmes de secours n'étant mis en oeuvre qu'après que le nombre des erreurs reconnues ait atteint une valeur donnée.

7. Procédé selon une des revendications précédentes, caractérisé en ce que dans le second programme de secours (C) au moins un des dispositifs de sécurité (8) est activé au bout d'un temps donné, tandis que la commande d'au moins un des actionneurs (7, 31) assurant le positionnement d'au moins un organe de réglage (8) est interrompue.

8. Procédé selon une des revendications précédentes, caractérisé en ce qu'au moins un des microcalculateurs (5, 17) est équipé d'un troisième programme de secours (B), dans lequel les valeurs servant à positionner au moins un des organes de réglage (8) sont calculées à partir d'une base de calcul fixe donnée, sans utilisation pour ce calcul de l'information fournie par les signaux des transmetteurs.

9. Procédé selon la revendication 8, caractérisé en ce que dans le troisième programme de secours (B), il est procédé à un contrôle de la position d'au moins un organe de réglage (8), le premier programme de secours (A) étant mis en oeuvre une fois reconnue la position médiane.

10. Dispositif de commande de l'angle de braquage des roues arrière d'un véhicule automobile, mettant en oeuvre le procédé selon une des revendications précédentes, dispositif qui comporte :
- au moins deux microcalculateurs, au moins un transmetteur de l'angle de braquage, de la vitesse du véhicule, de la vitesse de rotation des roues d'un essieu,
- au moins un organe de réglage de l'angle de braquage des roues d'un essieu du véhicule, avec un transmetteur de la valeur réelle de la position de l'organe de réglage ainsi qu'un frein de maintien jouant le rôle de dispositif de sécurité pour l'organe de réglage,
- au moins un actionneur servant à positionner l'organe de réglage,
- au moins un programme dans chacun des microcalculateurs, selon lequel le microcalculateur saisit les signaux provenant des transmetteurs, en déduit par le calcul des valeurs, ces valeurs et/ou les signaux saisis étant ensuite soumis à un contrôle de leur consistance, les valeurs calculées étant utilisées au moins en partie pour positionner au moins un organe de réglage, par le fait qu'un au moins des microcalculateurs établit à partir de ces valeurs des signaux correspondants et les envoie à au moins un des actionneurs,
- au moins deux programmes de circulation de secours dans chacun des microcalculateurs, au moins deux microcalculateurs (5, 17) décidant, sur la base du contrôle de la consistance, si le programme principal ou un des deux programmes de secours sera mis en oeuvre, ces microcalculateurs, avec le premier programme de secours, actionnant au moins un des dispositifs de sécurité et interrompant la commande d'au moins un des actionneurs assurant le positionnement d'au moins un organe de réglage,
dispositif caractérisé en ce que :
- au moins les deux microcalculateurs (5, 17), dans le second programme de secours (C), saisissent les signaux venant des transmetteurs et en tirent chacun par le calcul des valeurs servant au moins en partie au positionnement d'au moins un organe de réglage,
- au moins les deux microcalculateurs (5, 17) effectuent le contrôle de la consistance des signaux saisis et des valeurs calculées,
- les valeurs calculées pour assurer le positionnement d'au moins un organe de réglage (8) sont multipliées par un facteur qui va décroissant en fonction du temps écoulé depuis le début de la mise en oeuvre du second programme de secours (C), afin d'obtenir une réduction lente de l'amplitude du mouvement de l'organe de réglage (8),
- au moins un des deux microcalculateurs (5, 17) produit des signaux de commande, correspondant aux valeurs calculées et les envoie à au moins un des actionneurs (7, 31).

11. Dispositif selon la revendication 10, caractérisé en ce que les indicateurs donnant l'angle de braquage et la valeur réelle de la position sont au moins simplement redondants, chaque transmetteur et le transmetteur redondant correspondant étant reliés respectivement à des microcalculateurs (5, 17) différents.

12. Dispositif selon la revendication 11, caractérisé en ce que au moins les deux microcalculateurs (5, 17) utilisent toujours le premier programme de secours (4) s'ils reconnaissent au cours du contrôle de consistance qu'aucun des indicateurs (13) de la valeur réelle de la position de l'organe de réglage (8) ne fonctionne sans erreur et/ou que les valeurs calculées par au moins les deux microcalculateurs (5, 17) présentent entre elles un écart dépassant une valeur donnée.

13. Dispositif selon la revendication 11 ou 12, caractérisé en ce que au moins les deux microcalculateurs (5, 17) utilisent toujours le troisième programme de secours (B) lorsqu'ils reconnaissent, au cours du contrôle de la consistance, qu'aucun des indicateurs (1) de l'angle de braquage ne fonctionne sans erreur.

14. Dispositif selon une des revendications 10 à 13, caractérisé en ce que pour interrompre la commande d'au moins un des actionneurs (7, 31), le microcalculateur (5, 17) coupe l'alimentation d'au moins un des actionneurs (7, 31).

15. Dispositif selon la revendication 14, caractérisé en ce que le microcalculateur (5, 17) correspondant procède à la coupure de l'alimentation par l'intermédiaire d'au moins un relais.

16. Dispositif selon une des revendications 10 à 15, caractérisé en ce qu'il comporte un transmetteur d'erreur (21), qui est activé lorsqu'un des programmes de secours (A, B, C) est appelé.

17. Dispositif selon une des revendications 10 à 16, caractérisé en ce que le contrôle des signaux saisis et/ou des valeurs calculées s'effectue selon différents programme, dans les microcalculateurs concernés (5, 17).

18. Dispositif selon une des revendications 10 à 17, caractérisé en ce que les microcalculateurs (5, 17) ont des structures différentes au niveau des semiconducteurs.

19. Dispositif selon une des revendications 10 à 16, caractérisé en ce que pour surveiller chaque microcalculateur (5, 17), des circuits de surveillance, raccordés aux microcalculateurs respectifs (5, 17), reçoivent de ces microcalculateurs des signaux et, dans le cas où ces signaux présentent des ratés, interrompent la commande d'au moins un actionneur (7, 31) servant au positionnement d'au moins un organe de réglage (8).

20. Dispositif selon une des revendications 10 à 19, caractérisé en ce qu'il comporte un Dual Port-RAM, auquel au moins les deux microcalculateurs (5, 17) peuvent accéder.
